# EUROPÄISCHE PATENTSCHRIFT

(11) **EP 2 414 418 B1**
(45) Veröffentlichungstag und Bekanntmachung des Hinweises auf die Patenterteilung: **09.08.2017**
(21) Anmeldenummer: 10711892.9
(22) Anmeldetag: 31.03.2010
(51) Int. Cl.: C08G 18/10, C08G 18/32, C09J 175/00, C08G 18/72, C08G 18/79, C09J 5/06

(54) **ZWEISTUFIG AUSHÄRTENDE ZUSAMMENSETZUNG ENTHALTEND EIN OBERFLÄCHENDESAKTIVIERTES POLYISOCYANAT**
COMPOSITION CURABLE IN TWO STAGES COMPRISING A SURFACE DEACTIVATED POLYISOCYANATE
COMPOSITION À DOUBLE DURCISSEMENT CONTENANT UN POLYISOCYANATE DÉSACTIVÉ EN SURFACE

(30) Priorität: 31.03.2009 EP 09156891
(43) Veröffentlichungstag der Anmeldung: 08.02.2012
(73) Patentinhaber: Sika Technology AG, 6340 Baar (CH)
(72) Erfinder: ZAHN, Alain, 8610 Uster (CH); SCHLUMPF, Michael, CH-8143 Stallikon (CH); BURCKHARDT, Urs, CH-8049 Zürich (CH)
(74) Vertreter: Sika Patent Attorneys
(86) Internationale Anmeldenummer: PCT/EP2010/054264
(87) Internationale Veröffentlichungsnummer: WO 2010/112537

(56) Entgegenhaltungen:
- EP-A- 0 125 008
- EP-A- 0 125 436
- WO-A-88/06165
- DE-A1- 2 609 266
- DE-A1- 3 412 884
- DE-C1- 3 310 294

## Beschreibung

### Technisches Gebiet

Die Erfindung betrifft das Gebiet der einkomponentigen härtbaren Zusammensetzungen, sowie deren Anwendung als zweistufig aushärtender Klebstoff.

### Stand der Technik

In der Fertigung von Gütern werden vielfach Klebeverfahren eingesetzt, da sich das Kleben gegenüber anderen Verbindungstechniken durch technische und ökonomische Vorteile auszeichnet. Insbesondere bei Klebeverfahren mit reaktiven, durch chemische Vernetzung aushärtenden Klebstoffen wäre es oft erwünscht, wenn der Klebstoffauftrag auf ein Fügeteil vom eigentlichen Verkleben, d.h. dem stoffschlüssigen Verbinden eines Fügeteils mit einem anderen, räumlich oder zeitlich entkoppelt werden könnte, um einerseits den Fügeprozess zu beschleunigen und andererseits den Umgang mit dem Klebstoff, welcher spezielle Applikationsanlagen und oft auch Arbeitssicherheitsmassnahmen und zusätzliche Reinigungsschritte benötigt, in der Fertigung zu vermeiden. Ein Weg, die Entkopplung von Klebstoffauftrag und Verkleben zu erreichen, besteht im Einsatz eines zweistufig aushärtenden Klebstoffs.

Aus dem Stand der Technik bekannt sind zweistufig aushärtende Klebstoffe in Form von zweikomponentigen Systemen, bei welchen die erste Aushärtungsstufe durch Mischen der beiden Komponenten ausgelöst wird, und bei welchen die zweite Aushärtungsstufe durch die Einwirkung von beispielsweise Wärme oder UV-Strahlung zustande kommt.

Aus EP 0 062 780 A1 und EP 0 100 508 A2 sind heisshärtende Polyurethanzusammensetzungen bekannt, welche feinteilige feste Isocyanate enthalten, die durch Behandlung mit Aminen oberflächendesaktiviert wurden. Die oberflächendesaktivierten Isocyanate liegen dabei hauptsächlich in Kombination mit Polyolen vor. Diese Systeme sind bei Raumtemperatur lagerstabil und härten bei Temperaturen im Bereich von 70 °C bis 180 °C ohne Freisetzung flüchtiger Substanzen aus. Um eine schnelle Aushärtung zu erreichen, müssen aber entweder vergleichsweise hohe Temperaturen oder sehr aktive Katalysatoren verwendet werden, da die Reaktion von Hydroxylgruppen mit Isocyanatgruppen eher langsam ist. Zudem besteht die Gefahr von Blasenbildung bei der Aushärtung, insbesondere wenn zwischen der Applikation und der Aushärtung einige Zeit vergeht, da die Zusammensetzung aus der Umgebung Feuchtigkeit aufnehmen kann und bei der Reaktion von Isocyanaten mit Wasser CO₂ gebildet wird.

Aus EP 0 153 579 A2 sind entsprechende Systeme bekannt, bei welchen Polyole zumindest teilweise durch Polyamine ersetzt sind. Damit können die zuvor genannten Probleme zwar weitgehend vermindert werden. Diese Systeme weisen jedoch insbesondere Schwächen in der Dehnbarkeit und/oder Festigkeit auf und eigenen sich deshalb schlecht als elastische Klebstoffe. Die Auswahl an dafür geeigneten Polyaminen mit genügend hohem Molekulargewicht - so dass elastische Eigenschaften im ausgehärteten Endprodukt erhalten werden - ist zudem sehr beschränkt. Entweder man verwendet langkettige Typen von Polyether-Polyaminen, wie sie beispielsweise unter dem Handelsnamen Jeffamine^{®} (von Huntsman) kommerziell erhältlich, aber verhältnismässig teuer sind, oder man stellt andere geeignete polymere Strukturen mit endständigen Aminogruppen her, was aber mit erheblichem Aufwand verbunden ist. Weitere Nachteile ergeben sich aus dem Vorhandensein von freien Aminogruppen der Polyamine. Einerseits gehen die Aminogruppen unerwünschte Nebenreaktionen ein, beispielsweise mit Ester-Verbindungen oder mit Kohlendioxid aus der Luft. Andererseits führen die Aminogruppen der Polyamine aufgrund ihrer Basizität und ihrer Korrosivität zu grossen Einschränkungen beim Handling und ergeben Probleme in der Arbeitssicherheit.

### Darstellung der Erfindung

Die Aufgabe der vorliegenden Erfindung ist es daher, eine insbesondere als elastischer Klebstoff einsetzbare einkomponentige, zweistufig aushärtende Zusammensetzung zur Verfügung zu stellen, welche in der ersten Aushärtungsstufe zu einem vorvernetzten Material reagiert, und welche in der zweiten Aushärtungsstufe zu einem ausgehärteten Material reagiert.

Diese Aufgabe wird gelöst durch einkomponentige Zusammensetzungen gemäss Anspruch 1.

Danach lässt sich eine einkomponentige Zusammensetzung mit den erwünschten Aushärtungseigenschaften erhalten, wenn eine Kombination aus mindestens einem Isocyanatgruppen aufweisenden Polyurethanpolymer, mindestens einem spezifischen blockierten Amin, sowie mindestens einem bei Raumtemperatur festen, oberflächendesaktivierten Polyisocyanat verwendet wird. Insbesondere sind diese einkomponentigen Zusammensetzungen frei von Polyaminen und sind deshalb nicht korrosiv und vorteilhaft im Handling und in der Arbeitssicherheit. Zudem härten sie bei Einwirkung von Wärme sehr schnell und im Wesentlichen blasenfrei aus. Insbesondere sind die einkomponentigen Zusammensetzungen unter Ausschluss von Feuchtigkeit äusserst lagerstabil und die mittels Feuchtigkeit gebildeten vorvernetzten Zusammensetzungen sind in dieser Form lagerstabil und transportfähig und weisen insbesondere eine vorwiegend plastische Konsistenz auf. Somit eignen sich derartige Zusammensetzungen ideal zur Bildung von Modulkörpern, bei welchen die Zusammensetzung auf ein Substrat appliziert wurde, und dann unter Feuchtigkeitseinwirkung zu einer auf dem Substrat haftenden vorvernetzten Zusammensetzung führt. Derartige Modulkörper können gut gelagert und an den Ort einer Verklebung transportiert werden und bei Bedarf erhitzt und in einen Verbundkörper überführt werden. Insbesondere vorteilhaft ist hierbei, dass beim Verkleben trotz der zuweilen langen Zeit zwischen Applikation der Zusammensetzung und der Verklebung eine einwandfreie Haftung erzielt werden kann. Weiterhin ist es vorteilhaft, dass diese Zusammensetzung nicht zwangsläufig in zwei Schritten ausgehärtet werden muss, sondern dass sie auch vor oder während der Applikation durch Wärme aktiviert werden kann und sich dann wie ein üblicher einkomponentiger Polyurethanklebstoff über Feuchtigkeit aushärten lässt.

Es lassen sich somit in einfacher Art und Weise Zusammensetzungen realisieren, welche ausgehärtet über eine hohe Dehnbarkeit und eine hohe Festigkeit, d.h. über eine Bruchdehnung von mindestens 300 % und eine Zugfestigkeit von mindestens 3.0 MPa, beide gemessen nach DIN EN 53504, verfügen. Solche Materialien sind besonders gut geeignet als elastische Klebstoffe.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine einkomponentige Zusammensetzung gemäß Anspruch 1, welche in zwei Stufen aushärtbar ist, wobei in der ersten Aushärtungsstufe mittels Feuchtigkeit eine vorvernetzte Zusammensetzung Eigenschaften entsteht, und wobei in der zweiten Aushärtungsstufe mittels Wärme eine ausgehärtete Zusammensetzung entsteht.

Insbesondere weist die vorvernetzte Zusammensetzung vorwiegend plastische Eigenschaften auf. Insbesondere weist die ausgehärtete Zusammensetzung vorwiegend elastische Eigenschaften auf.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen Zeitraum von mehreren Wochen bis Monaten lagerstabil ist, sich also in ihren Anwendungs- oder Gebrauchseigenschaften durch die Lagerung nicht oder nur unwesentlich verändert, und welche mit Feuchtigkeit härtbar ist.

Als "vorvernetzt" wird im vorliegenden Dokument eine Zusammensetzung bezeichnet, bei welcher im Vergleich zum Ausgangszustand eine deutliche Erhöhung des mittleren Molekulargewichts der vernetzungsfähigen Anteile aufgrund von Vernetzungsreaktionen stattgefunden hat, ohne dass die Zusammensetzung aber vollständig vernetzt ist. Eine vorvernetzte Zusammensetzung enthält also noch reaktive, zur Vernetzung fähige Gruppen. Als "ausgehärtet" wird im vorliegenden Dokument eine Zusammensetzung bezeichnet, welche im Wesentlichen vollständig vernetzt ist. Eine ausgehärtete Zusammensetzung enthält also keine oder höchstens geringe Anteile von reaktiven, zur Vernetzung fähigen Gruppen.

Unter "vorwiegend plastischen Eigenschaften" wird ein Material mit einer derartigen Konsistenz verstanden, dass es mittels eines Spatels, gegebenenfalls unter grösserer Krafteinwirkung und gegebenenfalls unter Erwärmung auf eine Temperatur unter 60°C, dauerhaft verformt, insbesondere verstrichen, werden kann.

Unter "vorwiegend elastischen Eigenschaften" wird ein Material mit einer derartigen Konsistenz verstanden, dass es im Temperaturbereich von -20 °C bis +140 °C mittels eines Spatels, gegebenenfalls unter grösserer Krafteinwirkung, nicht dauerhaft verformt werden kann, sondern dass es innerhalb von einigen Sekunden bis Minuten im Wesentlichen wieder seine ursprüngliche Form annimmt. Bevorzugt weist ein solches Material eine hohe Dehnbarkeit und/oder eine hohe Festigkeit auf.

Als "hohe Dehnbarkeit" wird im vorliegenden Dokument eine Bruchdehnung von mindestens 300 %, bevorzugt mindestens 400 %, besonders bevorzugt mindestens 450 %, gemessen nach DIN EN 53504, bezeichnet. Als "hohe Festigkeit" wird im vorliegenden Dokument eine Zugfestigkeit von mindestens 3.0 MPa, bevorzugt mindestens 4.0 MPa, besonders bevorzugt mindestens 4.5 MPa, gemessen nach DIN EN 53504, bezeichnet.

Als "Raumtemperatur" wird im vorliegenden Dokument eine Temperatur von 25 °C bezeichnet.

Der Begriff "primäre Aminogruppe" bezeichnet im vorliegenden Dokument eine Aminogruppe in der Form einer NH₂-Gruppe, die an einen organischen Rest gebunden ist. Der Begriff "sekundäre Aminogruppe" bezeichnet eine Aminogruppe, in der das Stickstoffatom an zwei organische Reste gebunden ist, welche auch gemeinsam Teil eines Rings sein können. Der Begriff "tertiäre Aminogruppe" bezeichnet eine Aminogruppe, in der das Stickstoffatom (= tertiärer Amin-Stickstoff) an drei organische Reste gebunden ist, wobei zwei dieser Reste auch gemeinsam Teil eines Rings sein können.

Mit "Poly" beginnende Substanznamen wie Polyaldimin, Polyamin, Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter einer "geruchsarmen" Substanz wird eine Substanz verstanden, deren Geruch von menschlichen Individuen nur in geringem Masse wahrnehmbar, d.h. riechbar, ist, die also keinen intensiven Geruch aufweist, und wobei dieser geringe Geruch von den meisten menschlichen Individuen nicht als unangenehm oder abstossend empfunden wird.

Unter einer "geruchsfreien" Substanz wird eine Substanz verstanden, die für die meisten menschlichen Individuen nicht riechbar ist, die also keinen wahrnehmbaren Geruch aufweist.

Die einkomponentige, in zwei Stufen aushärtbare Zusammensetzung stellt eine einkomponentige Zusammensetzung **EZ** dar, umfassend
a) mindestens ein Isocyanatgruppen aufweisendes Polyurethanpolymer **PUP;**
b) mindestens ein blockiertes Amin **BA** mit mindestens zwei blockierten, hydrolytisch aktivierbaren Aminogruppen; und
c) mindestens ein bei Raumtemperatur festes, oberflächendesaktiviertes Polyisocyanat **DI.**

Hierbei gilt die Massgabe, dass die in der Zusammensetzung vorhandenen blockierten, hydrolytisch aktivierbaren Aminogruppen in Bezug auf die Anzahl Isocyanatgruppen des Polyurethanpolymers **PUP** im stöchiometrischen Überschuss vorliegen.

Die fett markierten Bezeichnungen wie **EZ, AZ, VZ, PUP, BA, DI** oder dergleichen im vorliegenden Dokument dienen lediglich für das bessere Leseverständnis und Identifizierung.

Bei der Aushärtung der einkomponentigen Zusammensetzung **EZ** in zwei Stufen entsteht in der ersten Aushärtungsstufe mittels Feuchtigkeit eine vorvernetzte Zusammensetzung **VZ** mit insbesondere vorwiegend plastischen Eigenschaften, und in der zweiten Aushärtungsstufe entsteht mittels Wärme eine ausgehärtete Zusammensetzung **AZ** mit insbesondere vorwiegend elastischen Eigenschaften.

Die einkomponentige Zusammensetzung **EZ** umfasst mindestens ein Isocyanatgruppen aufweisendes Polyurethanpolymer **PUP.** Das Polyurethanpolymer **PUP** ist insbesondere erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer **PUP** nach der Umsetzung aller Hydroxylgruppen des Polyols ein Gehalt an freien Isocyanatgruppen von 0.5 bis 15 Gewichts-%, besonders bevorzugt von 0.5 bis 5 Gewichts-%.

Gegebenenfalls kann das Polyurethanpolymer **PUP** unter Mitverwendung von Weichmachern hergestellt werden, wobei die verwendeten Weichmacher keine gegenüber Isocyanaten reaktive Gruppen enthalten.

Als Polyole für die Herstellung des Polyurethanpolymers **PUP** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen, wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 bis 30'000 g/mol, insbesondere von 400 bis 20'000 g/mol, und weisen bevorzugt eine mittlere OH-Funktionalität im Bereich von 1.6 bis 3 auf.

Als Polyole bevorzugt sind Polyether-, Polyester-, Polycarbonat- und Polyacrylatpolyole, bevorzugt Di- und Triole.

Besonders bevorzugt sind Polyetherpolyole, insbesondere Polyoxypropylen- und Polyoxypropylenpolyoxyethylenpolyole, sowie flüssige Polyesterpolyole und Polyetherpolyesterpolyole.

Besonders bevorzugt sind weiterhin amorphe, teilkristalline und kristalline Polyester- und Polycarbonatdiole mit einem Schmelzpunkt im Bereich von 40 °C bis 80 °C, insbesondere 50 °C bis 70 °C, insbesondere Adipinsäure/Hexandiol-Polyester, Azelainsäure/Hexandiol-Polyester, Dodecandicarbonsäure/Hexandiol-Polyester und Polycarbonatdiole auf der Basis von Hexandiol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymer **PUP** mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung eines Isocyanatgruppen aufweisenden Polyurethanpolymer **PUP** werden aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpentamethy-len-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocya-nato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohe-xen (Dimeryldiisocyanat), α,α,α',α',α",α"-Hexamethyl-1,3,5-mesitylentriisocya-nat, Oligomere und Polymere der vorgenannten Isocyanate, sowie beliebige Mischungen der vorgenannten Isocyanate. Bevorzugt sind HDI und IPDI.

Als Polyisocyanat für die Herstellung eines Isocyanatgruppen aufweisenden Polyurethanpolymer **PUP** besonders bevorzugt sind aromatische Polyisocyanate, insbesondere MDI.

Das Polyurethanpolymer **PUP** weist ein mittleres Molekulargewicht von vorzugsweise 500 g/mol oder darüber auf. Insbesondere weist das Polyurethanpolymer **PUP** ein mittleres Molekulargewicht von 1000 bis 30'000 g/mol, bevorzugt von 2000 bis 10'000 g/mol, auf. Weiterhin weist das Polyurethanpolymer **PUP** bevorzugt eine mittlere NCO-Funktionalität im Bereich von 1.7 bis 3, insbesondere 1.8 bis 2.5, auf.

Die einkomponentige Zusammensetzung **EZ** umfasst neben mindestens einem Polyurethanpolymer **PUP** weiterhin mindestens ein blockiertes Amin **BA** mit mindestens zwei blockierten, hydrolytisch aktivierbaren Aminogruppen.

Die blockierten, hydrolytisch aktivierbaren Aminogruppen des blockierten Amins **BA** sind insbesondere ausgewählt aus der Gruppe bestehend aus Oxazolidinogruppen und Aldiminogruppen. Solche blockierten Amine **BA** sind in der Polyurethanchemie bekannte Substanzen, die als sogenannte latente Härter in Isocyanatgruppen aufweisenden Zusammensetzungen verwendet werden.

Als "Oxazolidinogruppe" werden im vorliegenden Dokument sowohl Tetrahydrooxazol-Gruppen (5-Ring) als auch Tetrahydrooxazin-Gruppen (6-Ring) bezeichnet.

Bevorzugt als blockiertes Amin **BA** sind Polyaldimine **PA** der Formel (I), 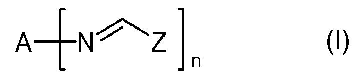 wobei
n für 2 oder 3 oder 4, bevorzugt für 2 oder 3, steht;
A für einen n-wertigen Kohlenwasserstoffrest mit 2 bis 30 C-Atomen, welcher gegebenenfalls mindestens ein Heteroatom, insbesondere in der Form von Ether-Sauerstoff oder tertiärem Amin-Stickstoff, enthält, steht; und
Z frei ist von Hydroxyl-, Mercapto- und von primären und sekundären Aminogruppen und
entweder für einen Rest Z¹ der Formel (II) steht, 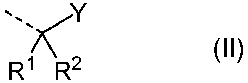 wobei
Y für einen einwertigen Kohlenwasserstoffrest mit 1 bis 32 C-Atomen steht, welcher gegebenenfalls mindestens ein Heteroatom, insbesondere Sauerstoff oder Stickstoff in der Form von Ether-, Carbonyl-, Ester-, Amido-, Harnstoff-, Urethan- oder tertiären Aminogruppen, aufweist, und
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen, oder für einen Rest Z² steht,
wobei Z² entweder für einen substituierten oder unsubstituierten Aryl- oder Heteroaryl-Rest, welcher eine Ringgrösse von 5 bis 8, bevorzugt 6, Atomen aufweist, steht, oder für 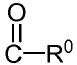 steht,
wobei R⁰ für ein Wasserstoffatom oder für einen Alkoxyrest oder für einen substituierten oder unsubstituierten Alkenyl- oder Arylalkenylrest mit mindestens 6 C-Atomen steht.

Die gestrichelten Linien in den Formeln in diesem Dokument stellen jeweils die Bindung zwischen einem Substituenten und dem zugehörigen Molekülrest dar.

Das Polyaldimin PA der Formel (I) weist Aldiminogruppen auf, welche am in α-Stellung zur Carbonylgruppe stehenden C-Atom kein Wasserstoffatom aufweisen und deshalb nicht zu Enaminogruppen tautomerisieren können. Dadurch stellen diese Aldiminogruppen besonders gut geschützte ("blockierte") primäre Aminogruppen dar, welche unter Ausschluss von Feuchtigkeit mit Isocyanatgruppen keine oder nur äusserst geringe Reaktivität zeigen. Dadurch sind diese Aldimine zusammen mit Isocyanatgruppen aufweisenden Verbindungen im Allgemeinen besonders gut lagerfähig.

Bevorzugt enthält A keine Hydroxyl-, Mercapto- und keine primären und sekundären Aminogruppen.

Bevorzugt steht Z für Z¹.

Bevorzugt stehen R¹ und R² jeweils für einen Methylrest.

Bevorzugt steht Z¹ für einen Rest der Formel (II a) oder (II b) oder (II c) oder (II d), 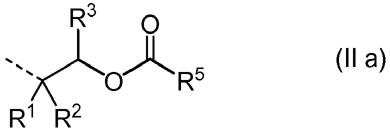 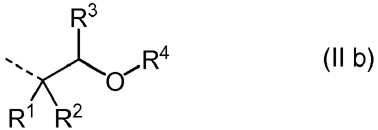 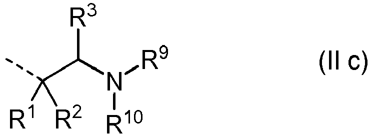 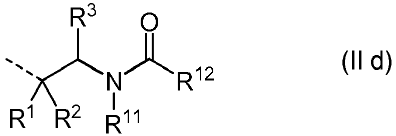 wobei
R³ für ein Wasserstoffatom oder für eine Alkylgruppe oder für eine Cycloalkylgruppe oder für eine Arylalkylgruppe mit 1 bis 12 C-Atomen steht;
   R⁴ für einen Kohlenwasserstoffrest mit 1 bis 30 C-Atomen, welcher gegebenenfalls Ether-Sauerstoff enthält, steht;
   R⁵ entweder
   für ein Wasserstoffatom steht, oder für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
   oder für einen einfach oder mehrfach ungesättigten, linearen oder verzweigten Kohlenwasserstoffrest mit 5 bis 30 C-Atomen steht, oder für einen, gegebenenfalls substituierten, aromatischen oder heteroaromatischen 5- oder 6-gliedrigen Ring steht;
R⁹ und R¹⁰ entweder
   unabhängig voneinander jeweils für einen einwertigen aliphatischen, cycloaliphatischen oder arylaliphatischen Rest mit 1 bis 20 C-Atomen, welcher gegebenenfalls Heteroatome in der Form von Ether-Sauerstoff oder tertiärem Amin-Stickstoff enthält, stehen,
   oder zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist und neben dem Stickstoffatom gegebenenfalls weitere Heteroatome in der Form von Ether-Sauerstoff oder tertiärem Amin-Stickstoff enthält, stehen; und
R¹¹ und R¹² entweder
   zusammen für einen, gegebenenfalls Sauerstoff- oder Schwefelatome aufweisenden, zweiwertigen Rest mit 2 bis 10 C-Atomen, der Teil eines, gegebenenfalls substituierten, 5- oder 6- oder 7-gliedrigen Rings ist, stehen,
   oder
   R¹¹ für einen Alkyl-, Cycloalkyl-, Arylalkyl- oder Acylrest mit 1 bis 10 C-Atomen steht, und
   R¹² für ein Wasserstoffatom oder für einen einwertigen Rest mit 1 bis 20 C- Atomen, welcher ausgewählt ist aus der Gruppe bestehend aus Alkyl-, Cycloalkyl-, Arylalkyl-, Arylrest, -OR^{12'}, -SR^{12'} und - NR^{12'}R^{12"}, steht,
   wobei R^{12'} und R^{12"} entweder jeweils für einen Kohlenwasserstoffrest oder zusammen für einen Alkylenrest, der Teil eines 5-, 6-oder 7-gliedrigen Rings ist, stehen.

Bevorzugt steht R³ für ein Wasserstoffatom.

Bevorzugt steht R⁴ für einen Kohlenwasserstoffrest mit 6 bis 30, insbesondere mit 11 bis 30, C-Atomen, welcher gegebenenfalls Ether-Sauerstoffe enthält.

Bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen.

Bevorzugt stehen R⁹ und R¹⁰ jeweils unabhängig voneinander für Methyl, Ethyl, Propyl, Isopropyl, Butyl, Isobutyl, 2-Ethylhexyl, Cyclohexyl oder Benzyl, oder sie bilden zusammen - unter Einbezug des Stickstoffatoms - einen Ring, insbesondere einen Pyrrolidin-, Piperidin-, Morpholin- oder N-Alkylpiperazin-Ring, wobei dieser Ring gegebenenfalls substituiert ist.

Bevorzugt steht R¹¹ für einen Methyl-, Ethyl-, Propyl-, Isopropyl-, Butyl-, 2-Ethylhexyl-, Cyclohexyl- oder Benzylrest und R¹² für ein Wasserstoffatom oder einen Methyl-, Ethyl-, Propyl-, Isopropyl-, Butyl-, 2-Ethylhexyl-, Cyclohexyl-, Benzyl-, Methoxy-, Ethoxy-, Propoxy- oder Isopropoxyrest, oder R¹¹ und R¹² bilden zusammen - unter Einbezug des Stickstoffatoms und der Carbonyl- bzw. Thiocarbonylgruppe - einen Ring, insbesondere einen 2-Pyrrolidon-Ring, einen Pyrrolidin-2,5-dion-Ring, einen Piperidin-2-on-Ring, einen Piperidin-2,6-dion-Ring, einen Azepan-2-on-Ring, einen Oxazolidin-2-on-Ring oder einen Thiazolidin-2-on-Ring, wobei ein solcher Ring gegebenenfalls substituiert ist.

Am meisten bevorzugt steht Z¹ für einen Rest der Formel (II a'), 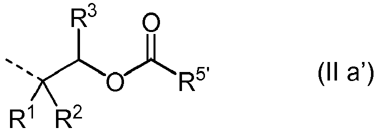 wobei
R^{5'} entweder
   für einen linearen oder verzweigten Alkylrest mit 6 bis 30, insbesondere 11 bis 30, C-Atomen, gegebenenfalls mit cyclischen Anteilen und gegebenen-falls mit mindestens einem Heteroatom, insbesondere Sauerstoff in der Form von Ether-, Carbonyl- oder Ester-Gruppen, steht,
   oder für einen einfach oder mehrfach ungesättigten, linearen oder verzweigten Kohlenwasserstoffrest mit 6 bis 30, insbesondere 11 bis 30, C-Atomen, steht;
und R¹, R² und R³ die bereits genannten Bedeutungen aufweisen.

R^{5'} steht am meisten bevorzugt für einen C₁₁-Alkylrest.

Polyaldimine **PA,** bei welchen Z für einen Rest Z¹ der Formel (II a') steht, werden im Folgenden als Polyaldimin **PA1** der Formel (III) bezeichnet 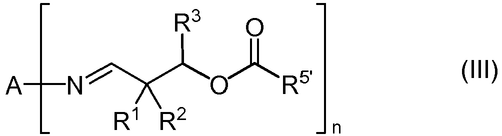 wobei n, A, R¹, R², R³ und R^{5'} die bereits erwähnten Bedeutungen aufweisen.

Die Polyaldimine **PA1** der Formel (III) weisen den Vorteil auf, dass sie geruchsarm oder geruchsfrei sind und dass der daraus freisetzbare Aldehyd ebenfalls geruchsarm oder geruchsfrei ist. Weist der Rest R^{5'} mindestens 11 C-Atome auf, sind die Polyaldimine geruchsfrei und der daraus freisetzbare Aldehyd ist ebenfalls geruchsfrei.

Ein Polyaldimin **PA** der Formel (I) ist erhältlich aus der Kondensations-reaktion von mindestens einem Amin **B** der Formel (IV) mit mindestens einem Aldehyd **ALD** der Formel (V), 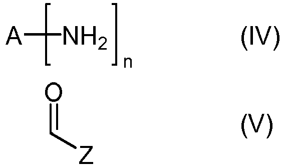 wobei n, A und Z die bereits genannten Bedeutungen aufweisen.

Als Amin **B** geeignet sind insbesondere
- aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3-und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-tri-methylcyclohexan (= Isophorondiamin oder IPDA), 2- und 4-Methyl-1,3-di-aminocyclohexan und Mischungen davon, 1,3- und 1,4-Bis-(aminomethyl)-cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,4-Diamino-2,2,6-tri-methylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, Bis-(3-aminopropyl)polytetrahydrofurane und andere Polytetrahydrofuran-diamine mit Molekulargewichten bis 550 g/mol, sowie Polyoxyalkylen-Diamine mit einem Molekulargewicht bis 600 g/mol. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} ED-600, Jeffamine^{®} XTJ-568, Jeffamine^{®} XTJ-569, Jeffamine^{®} EDR-104, Jeffamine^{®} EDR-148, Jeffamine^{®} EDR-176; Polyetheramin D 230 und Polyetheramin D 400, PC Amine^{®} DA 250 und PC Amine^{®} DA 400;
- aliphatische, cycloaliphatische oder arylaliphatische Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
- Polyoxyalkylen-Triamine mit einem Molekulargewicht bis 600 g/mol, welche typischerweise Produkte aus der Aminierung von Polyoxyalkylen-Triolen darstellen und beispielsweise erhältlich sind unter dem Handelsnamen Jeff-amine^{®} (von Huntsman), unter dem Namen Polyetheramin (von BASF) oder unter dem Namen PC Amine^{®} (von Nitroil), wie zum Beispiel Jeffamine^{®} T-403, Polyetheramin T403 und PC Amine^{®} TA 403;
- aromatische Di- und Triamine, wie beispielsweise 1,2-, 1,3- und 1,4-Phenylendiamin, 2,4- und 2,6-Toluylendiamin (TDA), 3,4-Toluylendiamin, 3,5-Dimethylthio-2,4- und -2,6-toluylendiamin, 3,5-Diethyl-2,4- und -2,6-toluylendiamin (DETDA), 2,4,6-Triethyl-1,3-phenylendiamin, 2,4,6-Triisopropyl-1,3-phenylendiamin, 3-Ethyl-5-methyl-2,4-toluylendiamin, 3,5-Diisopropyl-2,4-toluylendiamin, 3,5-Bis-(1-methylpropyl)-2,4-toluylendiamin, 3,5-Bis-(tert.butyl)-2,4-toluylendiamin, 3-Ethyl-5-isopropyl-2,4-toluylendiamin, 5-Isopropyl-2,4-toluylendiamin, 5-(tert.Butyl)-2,4-toluylendiamin, 4,6-Bis-(1-methylpropyl)-1,3-phenylendiamin, 4-Isopropyl-6-(tert.butyl)-1,3-phenylendiamin, 4-Ethyl-6-isopropyl-1,3-phenylendiamin, 4-Ethyl-6-(2-methylpropyl)-1,3-phenylendiamin, 4-Ethyl-6-(1-methylpropyl)-1,3-phenylendiamin, 4-Ethyl-6-(2-methylpropyl)-1,3-phenylendiamin, 4-Isopropyl-6-(1-methylpro-pyl)-1,3-phenylendiamin, 4-(tert.Butyl)-6-(2-methylpropyl)-1,3-phenylendiamin, 4-Cyclopentyl-6-ethyl-1,3-phenylendiamin, 4-Cyclopentyl-6-isopropyl-1,3-phenylendiamin, 4,6-Dicyclopentyl-1,3-phenylendiamin, 3-Isopropyl-2,6-toluylendiamin, 2-Methylpropyl-(4-chloro-3,5-diaminobenzoat), tert.Butyl-(4-chloro-3,5-diaminobenzoat), 2,6-Diaminopyridin, Melamin, 4,4'-, 2,4'- und 2,2'-Diaminodiphenylmethan (MDA), 3,3'-Dimethyl-4,4'-diaminodiphenyl-methan, 3,3'-Dichloro-4,4'-diaminodiphenylmethan (MOCA), 3,3',5,5'-Tetra-ethyl-4,4'-diaminodiphenylmethan (M-DEA), 3,3',5,5'-Tetraethyl-2,2'-dichlo-ro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-di-aminodiphenylmethan (M-DIPA), 3,3',5,5'-Tetra-(1-methylpropyl)-4,4'-di-aminodiphenylmethan, 3,3'-Dimethyl-5,5'-di-tert.butyl-4,4'-diaminodiphenyl-methan, 3,3'-Di-tert.butyl-4,4'-diaminodiphenylmethan, 4,4'-Diaminodiphenylsulfon (DDS), 4-Amino-N-(4-aminophenyl)-benzolsulfonamid, 5,5'-Methylendianthranilsäure, Dimethyl-(5,5'-Methylendianthranilat), 1,3-Propylen-bis-(4-aminobenzoat), 1,4-Butylen-bis-(4-aminobenzoat), Polytetramethylen-oxid-bis-(4-aminobenzoat) (erhältlich als Versalink^{®} von Air Products) und 1,2-Bis-(2-aminophenylthio)-ethan;
- Polyamine mit primären aromatischen und primären aliphatischen Aminogruppen, insbesondere 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin und 4-[(2-Aminocyclohexyl)methyl]-anilin.

Bevorzugt ist das Amin **B** ausgewählt aus der Gruppe bestehend aus 1,6-Hexamethylendiamin, MPMD, DAMP, IPDA, TMD, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]-decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Amino-methyl-1,8-octandiamin, Polyoxyalkylen-Polyaminen mit zwei oder drei Aminogruppen und einem Molekulargewicht bis 600 g/mol, insbesondere die unter dem Handelsnamen Jeffamine^{®} erhältlichen Typen D-230, D-400 und T-403 von Huntsman und dazu analoge Verbindungen von BASF oder Nitroil; 1,3-und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan und Mischungen der genannten Polyamine.

Als Amin **B** besonders bevorzugt sind Polyoxyalkylen-Polyamine mit zwei oder drei Aminogruppen und einem Molekulargewicht bis 600 g/mol, insbesondere die unter dem Handelsnamen Jeffamine^{®} erhältlichen Typen D-230, D-400 und T-403 von Huntsman und dazu analoge Verbindungen von BASF oder Nitroil, sowie Abmischungen solcher Polyamine, insbesondere Abmischungen von difunktionellen mit trifunktionellen Typen.

Die Aldehyde **ALD** der Formel (V) sind nicht enolisierbar. Aldimine mit Aldiminogruppen ausgehend von einem nicht enolisierbaren Aldehyd können keine Enaminogruppen bilden und stellen deshalb besonders gut blockierte Amine dar.

In einer bevorzugten Ausführungsform weist der Aldehyd **ALD** einen Rest Z¹ der Formel (II a) auf. Solche Aldehyde stellen Ester von aliphatischen, cycloaliphatischen oder arylaliphatischen 2,2-disubstituierten 3-Hydroxyaldehyden, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cy-clohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar, wobei als Carbonsäuren die beispielsweise die Folgenden geeignet sind: gesättigte aliphatische Carbonsäuren, wie Ameisensäure, Essigsäure, Propionsäure, Buttersäure, Isobuttersäure, Valeriansäure, Capronsäure, 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure; arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden. Bevorzugt sind Carbonsäuren mit mindestens 7 C-Atomen, insbesondere solche mit 12 bis 31 C-Atomen, insbesondere Laurinsäure, Myristinsäure, Palmitinsäure, Stearinsäure und Ölsäure. Speziell bevorzugt ist Laurinsäure.

In einer weiteren bevorzugten Ausführungsform weist der Aldehyd **ALD** einen Rest Z¹ der Formel (II b) auf. Solche Aldehyde stellen Ether von aliphatischen, cycloaliphatischen oder arylaliphatischen 2,2-disubstituierten 3-Hydroxyaldehyden mit Alkoholen oder Phenolen der Formel R⁴-OH dar. Bevorzugte Aldehyde **ALD** in Form solcher Ether sind 2,2-Dimethyl-3-phenoxy-propanal, 3-Cyclohexyloxy-2,2-dimethyl-propanal, 2,2-Dimethyl-3-(2-ethyl-hexyloxy)-propanal, 2,2-Dimethyl-3-lauroxy-propanal und 2,2-Dimethyl-3-stearoxy-propanal.

In einer weiteren bevorzugten Ausführungsform weist der Aldehyd **ALD** einen Rest Z¹ der Formel (II c) auf. Solche Aldehyde sind insbesondere erhältlich als Produkt einer Mannich-Reaktion oder einer der Mannich-Reaktion analogen α-Aminoalkylierung, wie sie aus der Fachliteratur bekannt sind; ein solcher Aldehyd kann deshalb auch als Mannich-Base bezeichnet werden. Dabei werden ein sekundärer Aldehyd, insbesondere Isobutyraldehyd, ein weiterer Aldehyd, insbesondere Formaldehyd, und ein sekundäres aliphatisches Amin unter Wasserabspaltung zu einem Aldehyd **ALD** umgesetzt. Besonders geeignete Aldehyde **ALD** in Form einer solchen Mannich-Base sind 2,2-Dimethyl-3-(N-morpholino)-propanal, 2,2-Dimethyl-3-(N-(2,6-dimethyl)mor-pholino)-propanal, 2,2-Dimethyl-3-(N-benzylmethylamino)-propanal, 2,2-Dimethyl-3-(N-benzylisopropylamino)-propanal und 2,2-Dimethyl-3-(N-cyclohexyl-methylamino)-propanal.

In einer weiteren bevorzugten Ausführungsform weist der Aldehyd **ALD** einen Rest Z¹ der Formel (II d) auf. Solche Aldehyde sind insbesondere als Produkt einer Mannich-Reaktion erhältlich - auf dieselbe Weise wie die Aldehyde **ALD** mit einem Rest Z¹ der Formel (II c) - wobei aber anstelle eines sekundären aliphatischen Amins ein Amid, Lactam, Carbamat oder Imid eingesetzt wird. Besonders geeignete Aldehyde **ALD** mit einem Rest Z¹ der Formel (II d) sind N-(2,2-Dimethyl-3-oxopropyl)-N-methylacetamid, N-(2,2-Dimethyl-3-oxopropyl)-N-butylacetamid, N-(2,2-Dimethyl-3-oxopropyl)-N-(2-ethylhexyl)acetamid, N-(2,2-Dimethyl-3-oxopropyl)-N-benzylacetamid, N-(2,2-Dimethyl-3-oxopropyl)-N-methylbutyramid, N-(2,2-Dimethyl-3-oxopropyl)-N-methyl-(2-ethylcapronamid), N-(2,2-Dimethyl-3-oxopropyl)-N-methylbenzamid, O-Ethyl-N-(2,2-dimethyl-3-oxopropyl)-N-methylcarbamat, N-(2,2-Dimethyl-3-oxo-propyl)-pyrrolidin-2-on, N-(2,2-Dimethyl-3-oxopropyl)-piperidin-2-on, N-(2,2-Dimethyl-3-oxopropyl)-azepan-2-on, N-(2,2-Dimethyl-3-oxopropyl)-oxazolidin-2-on, N-(2,2-Dimethyl-3-oxopropyl)-pyrrolidin-2,5-dion und N-(2,2-Dimethyl-3-oxopropyl)-phthalimid.

In einer weiteren bevorzugten Ausführungsform weist der Aldehyd **ALD** einen Rest Z² auf. Solche Aldehyde **ALD** sind beispielsweise aromatische Aldehyde, wie Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd, Chinolin-2-carbaldehyd und dessen 3-, 4-, 5-, 6-, 7- und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Als Aldehyd **ALD** der Formel (V) bevorzugt sind 2,2-Dimethyl-3-lauroyl-oxy-propanal, 2,2-Dimethyl-3-myristoyloxy-propanal, 2,2-Dimethyl-3-palmitoyl-oxy-propanal, 2,2-Dimethyl-3-stearoyloxy-propanal und 2,2-Dimethyl-3-oleyl-oxy-propanal.

Als Aldehyd **ALD** der Formel (V) am meisten bevorzugt ist 2,2-Dimethyl-3-lauroyloxy-propanal.

Das blockierte Amin **BA** ist in der einkomponentigen Zusammensetzung **EZ** in einer solchen Menge vorhanden, dass die blockierten, hydrolytisch aktivierbaren Aminogruppen in Bezug auf die Anzahl Isocyanatgruppen des Polyurethanpolymers **PUP** im stöchiometrischen Überschuss vorliegen.

Vorteilhaft liegt das blockierte Amin **BA** in der einkomponentigen Zusammensetzung **EZ** in einer solchen Menge vor, dass das Verhältnis der blockierten, hydrolytisch aktivierbaren Aminogruppen zur Anzahl Isocyanatgruppen des Polyurethanpolymers **PUP** 1.05 bis 2.0, bevorzugt 1.1 bis 1.75, besonders bevorzugt 1.2 bis 1.5, beträgt.

Die einkomponentige Zusammensetzung **EZ** umfasst neben mindestens einem Polyurethanpolymer **PUP** und mindestens einem blockierten Amin **BA** weiterhin mindestens ein bei Raumtemperatur festes, oberflächendesaktiviertes Polyisocyanat **DI.**

Bevorzugt liegt das oberflächendesaktivierte Polyisocyanat **DI** in feinteiliger Form vor, wobei als "feinteilig" eine Substanz mit einem mittleren Teilchendurchmesser von kleiner als 120 µm bezeichnet wird.

Besonders bevorzugt liegt der mittlere Teilchendurchmesser des oberflächendesaktivierten Polyisocyanates **DI** im Bereich von 0.01 bis 100 µm, bevorzugt 0.1 bis 50 µm, besonders bevorzugt 0.3 bis 30 µm.

Bei Raumtemperatur feste, oberflächendesaktivierte Polyisocyanate sind aus dem Stand der Technik bekannt, beispielsweise aus EP 0 062 780 A1, EP 0 100 508 A2 und EP 0 153 579 A2.

Dem oberflächendesaktivierten Polyisocyanat **DI** liegt ein bei Raumtemperatur festes Polyisocyanat zugrunde, dessen Schmelzpunkt deutlich über Raumtemperatur liegt. Vorteilhaft weist das bei Raumtemperatur feste Polyisocyanat einen Schmelzpunkt von mindestens 40 °C, bevorzugt mindestens 80 °C, besonders bevorzugt mindestens 120 °C, auf.

Insbesondere ist das bei Raumtemperatur feste Polyisocyanat ausgewählt aus der Gruppe bestehend aus Naphthalin-1,5-diisocyanat (NDI), 3,3'-Dimethyl-4,4'-diisocyanatodiphenyl (TODI), 1,4-Phenylendiisocyanat, dem Isocyanurat von 1-Isocyanato-3,3,5-trimethyl-5-isocyanatomethyl-cyclohexan, dem Uretdion von 4,4'-Diphenylmethandiisocyanat, dem Uretdion von 2,4-Toluylendiisocyanat und dem Harnstoff von 2,4-Toluylendiisocyanat. Besonders bevorzugt sind Naphthalin-1,5-diisocyanat (NDI), das Uretdion von 2,4-Toluylendiisocyanat sowie der Harnstoff von 2,4-Toluylendiisocyanat.

Das bei Raumtemperatur feste Polyisocyanat liegt bevorzugt in feinteiliger Form vor, mit einem mittleren Teilchendurchmesser im Bereich von 0.01 bis 100 µm, vorzugsweise 0.1 bis 50 µm, insbesondere 0.3 bis 30 µm.

Ein kommerziell erhältliches, feinteiliges Uretdion von 2,4-TDI ist beispielsweise Addolink^{®} TT (Rhein Chemie).

Das oberflächendesaktivierte Polyisocyanat **DI** besteht aus Teilchen von bei Raumtemperatur festem Polyisocyanat, deren Oberfläche mit einer mehr oder weniger dicken Schicht einer Substanz bedeckt ist, welche bei Raumtemperatur oder leicht erhöhter Temperatur ausreichend undurchlässig und genug beständig ist, um die Isocyanatgruppen im Innern des Teilchens dauerhaft einzuschliessen und so gegenüber chemischen Reaktionspartnern, insbesondere Verbindungen mit aktiven Wasserstoffatomen, unzugänglich zu machen, sie also zu "desaktivieren". Bei Erwärmung des oberflächendesaktivierten Polyisocyanats **DI** auf eine Temperatur von mindestens 60 °C, insbesondere mindestens 80 °C, wird die Schicht auf den Polyisocyanat-Teilchen soweit beschädigt, dass die Isocyanatgruppen im Teilcheninnern für chemische Reaktionspartner zugänglich werden, sie also "aktiviert" werden.

Das oberflächendesaktivierte Polyisocyanat **DI** wird insbesondere erhalten aus der Umsetzung des ihm zugrunde liegenden bei Raumtemperatur festen Polyisocyanats mit einer Substanz, welche mindestens eine mit Isocyanatgruppen reaktionsfähige Gruppe aufweist. Durch eine chemische Reaktion auf der Oberfläche der Polyisocyanat-Teilchen wird eine bei Raumtemperatur oder leicht erhöhter Temperatur beständige, d.h. undurchlässige und weitgehend unlösliche, Schicht ("Schutzschicht") gebildet. Eine für diese Umsetzung geeignete Substanz, im Folgenden als "Substanz zur Oberflächendesaktivierung" bezeichnet, ist insbesondere ausgewählt aus der Gruppe bestehend aus Wasser, primären und sekundären aliphatischen Aminen, Amino-amiden, Hydrazinen, Hydraziden, Phenolen, Carbonsäuren, Amidinen und Guanidinen.

Bei der Wahl der Substanz zur Oberflächendesaktivierung gilt es zu beachten, dass die gebildete Schutzschicht gegenüber allen in der Zusammensetzung vorhandenen Substanzen, insbesondere auch den zur Herstellung des blockierten Amins **BA** eingesetzten Ketonen und Aldehyden, möglichst beständig ist, um zu verhindern, dass die Isocyanatgruppen des oberflächendesaktivierten Polyisocyanates **DI** vorzeitig aktiviert werden.

Als Substanz zur Oberflächendesaktivierung bevorzugt sind primäre und sekundäre Amine, insbesondere primäre Polyamine, insbesondere die als Amine **B** der Formel (IV) genannten primären Amine, weiterhin Fettamine, Polyalkylenamine, Polyamidoamine, sowie Carbonsäuresalze dieser Amine. Die mit diesen Substanzen gebildete Schutzschicht weist dabei Harnstoffgruppen auf.

Als Fettamine werden von Fettsäuren und Fettsäuregemischen abgeleitete Amine bezeichnet, wie zum Beispiel Laurylamin, Myristylamin, Palmitinamin, Stearylamin, Oleylamin, Cocoalkylamin, C₁₆-C₂₂-Alkylamin, Soyaalkylamin, Oleylamin und Talgalkylamin, erhältlich beispielsweise unter den Handelsnamen Armeen^{®} (von Akzo Nobel) oder Rofamin^{®} (von Ecogreen Oleochemicals), sowie weiterhin durch Cyanoethylierung und nachfolgender Reduktion von Fettaminen erhältliche Diamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, erhältlich beispielsweise als Duomeen^{®} CD, Duomeen^{®} M, Duomeen^{®} O, Duomeen^{®} OV oder Duomeen^{®} T (Akzo Nobel), sowie weiterhin von Fettaminen abgeleitete Triamine und Tetramine, wie Cocoalkyldipropylentriamin, Oleyldipropylentriamin, Talgalkyldipropylentriamin, Oleyltripropylentetramin und Talgalkyltripropylentetramin, erhältlich beispielsweise als Triameen^{®} C, Triameen^{®} OV, Triameen^{®} T, Tetrameen^{®} OV und Tetrameen^{®} T (Akzo Nobel).

Als Polyalkylenamine werden oligomere Ethylenamine mit anteilig sekundären Aminogruppen bezeichnet, die insbesondere als technische Gemische vorliegen, wie zum Beispiel Diethylentriamin (DETA), Triethylentetramin (TETA), Tetraethylenpentamin (TEPA), Pentaethylenhexamin (PEHA).

Als Polyamidoamine werden Substanzen mit mindestens einer Amido-und mindestens einer Aminogruppe bezeichnet, insbesondere Reaktionsprodukte aus einer ein- oder mehrwertigen Carbonsäure, beziehungsweise deren Ester oder Anhydride, und einem aliphatischen, cycloaliphatischen oder aromatischen Polyamin, wobei das Polyamin im stöchiometrischen Überschuss eingesetzt wird. Als mehrwertige Carbonsäure wird üblicherweise eine sogenannte Dimerfettsäure verwendet, und als Polyamin wird üblicherweise ein Polyalkylenamin wie beispielsweise Diethylentriamin (DETA) oder Triethylentetramin (TETA) verwendet. Kommerziell erhältliche Polyamidoamine sind beispielsweise Versamid^{®} 100, 125, 140 und 150 (von Cognis), Aradur^{®} 223, 250 und 848 (von Huntsman), Euretek^{®} 505, 510, 514 S, 530, 531, 540, 541, 545, 547, 549, 3607 (von Huntsman) und Beckopox^{®} EH 651, EH 654, EH 655, EH 661 und EH 663 (von Cytec).

Als Substanz zur Oberflächendesaktivierung besonders bevorzugt sind kurzkettige aliphatische primäre Diamine, insbesondere Ethylendiamin, 1,2-Propandiamin, 1,3-Propandiamin, 1,4-Butandiamin und 1,6-Hexandiamin; cycloaliphatische primäre Diamine, insbesondere Bis-(4-aminocyclohexyl)-methan, Bis-(4-amino-3-methylcyclohexyl)-methan und 1-Amino-3-aminomethyl-3,5,5-trimethylcyclohexan; Fettamine, insbesondere Stearylamin und Oleylamin; Polyalkylenamine, insbesondere Diethylentriamin, Triethylentetramin und Tetraethylenpentamin; sowie Polyamidoamine, insbesondere aus Dimerfettsäuren und Diethylentriamin oder Triethylentetramin.

Als oberflächendesaktiviertes Polyisocyanat **DI** besonders bevorzugt ist das Uretdion von 2,4-TDI, welches mittels einem Polyamidoamin oberflächendesaktiviert ist. Damit werden besonders lagerstabile einkomponentige Zusammensetzungen **EZ** erhalten.

Zur Umsetzung mit dem festen Polyisocyanat wird die Substanz zur Oberflächendesaktivierung vorteilhaft in einer solchen Menge eingesetzt, dass auf 100 Isocyanatgruppen 0.5 bis 20, bevorzugt 1 bis 15, besonders bevorzugt 3 bis 12, gegenüber Isocyanatgruppen reaktive Gruppen vorhanden sind.

Die Umsetzung des bei Raumtemperatur festen Polyisocyanats mit der Substanz zur Oberflächendesaktivierung wird bei einer Temperatur unterhalb des Schmelzpunkts des bei Raumtemperatur festen Polyisocyanats, bevorzugt bei einer Temperatur unterhalb von 50 °C, durchgeführt, wobei das Polyisocyanat in einem flüssigen Medium dispergiert vorliegt, in welchem die auf der Oberfläche der Polyisocyanat-Teilchen gebildete Schicht bei dieser Temperatur weitgehend unlöslich ist. Als flüssiges Medium geeignet sind insbesondere Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene. Als flüssiges Medium weiterhin geeignet sind Polyole, wie sie vorgängig zur Herstellung eines Polyurethanpolymers **PUP** erwähnt wurden, sowie weiterhin sogenannte gecappte Polyole, also Polyole, deren Hydroxylgruppen umgesetzt wurden, beispielsweise zu Ester- oder insbesondere zu Ethergruppen. Weiterhin als flüssiges Medium geeignet sind Polyurethanpolymere, insbesondere Polyurethanpolymere **PUP,** deren Isocyanatgruppen mit beispielsweise monofunktionellen Alkoholen, Thiolen oder primären oder sekundären Aminen umgesetzt sind, sowie weiterhin bei Raumtemperatur flüssige Polymere, welche weitgehend frei sind von Isocyanatgruppen oder gegenüber Isocyanatgruppen reaktiven Gruppen.

Es ist möglich, das bei Raumtemperatur feste Polyisocyanat, welches dem oberflächendesaktivierten Polyisocyanat **DI** zugrunde liegt, vor der Oberflächendesaktivierung mit einem zweiten, bei Raumtemperatur flüssigen Polyisocyanat so zu behandeln, dass dieses zweite Polyisocyanat die Oberfläche des bei Raumtemperatur festen Polyisocyanates benetzt bzw. überzieht, und erst anschliessend die Oberflächendesaktivierung mit der Substanz zur Oberflächendesaktivierung durchzuführen. Auf diese Weise wird die oberflächendesaktivierende Schicht aus dem zweiten, bei Raumtemperatur flüssigen Polyisocyanat aufgebaut.

Das oberflächendesaktivierte Polyisocyanat **DI** liegt in der einkomponentigen Zusammensetzung **EZ** vorteilhaft in einer solchen Menge vor, dass das Verhältnis der in Bezug auf das Polyurethanpolymer **PUP** überschüssigen blockierten, hydrolytisch aktivierbaren Aminogruppen des blockierten Amins **BA** zu den Isocyanatgruppen des oberflächendesaktivierten Polyisocyanats **DI** 0.25 bis 1, bevorzugt 0.3 bis 0.8, beträgt.

Die einkomponentige Zusammensetzung **EZ** kann neben mindestens einem Polyurethanpolymer **PUP,** mindestens einem blockierten Amin **BA** und mindestens einem oberflächendesaktivierten Polyisocyanat **DI** weitere Bestandteile enthalten.

Insbesondere kann sie ein Material enthalten, welches die Wärmeleitfähigkeit der Zusammensetzung erhöht und/oder es aufgrund seiner piezo-elektrischen, ferromagnetischen oder superparamagnetischen Eigenschaften erlaubt, die Zusammensetzung durch Anlegen von magnetischen und/oder elektrischen Wechselfeldern, insbesondere Mikrowellen oder Induktion, zu erwärmen. Dies erlaubt es, die Zusammensetzung, welche im allgemeinen eine eingeschränkte Wärmeleitfähigkeit aufweist, schneller zu erwärmen und damit beschleunigt auszuhärten. Als derartiges Material geeignet sind insbesondere Graphit, leitfähige Russe und Metallpulver; Piezoelektrika wie Quarz, Turmalin, Bariumtitanat, Lithiumsulfat, Kalium(Natrium)tartrat, Ethylendiamintartrat und Blei-Zirkonium-Titanat; Ferromagnetika oder Superparamagnetika wie die Metalle Aluminium, Kobalt, Eisen, Nickel und deren Legierungen, Metalloxide vom Typ n-Maghemit (γ-Fe₂O₃), n-Magnetit (Fe₃O₄), sowie Ferrite der allgemeinen Formel MFe₂O₄, wobei M für zweiwertige Metalle aus der Gruppe Kupfer, Zink, Kobalt, Nickel, Magnesium, Calcium oder Cadmium steht. Bevorzugt liegt dieses Material feinteilig vor, wobei der mittlere Teilchendurchmesser unter 120 µm, insbesondere unter 50 µm, liegt. Für die Ausnutzung des superparamagnetischen Effekts liegt der mittlere Teilchendurchmesser bevorzugt unter 50 nm, insbesondere unter 30 nm.

Als weitere Bestandteile kann die einkomponentige Zusammensetzung **EZ** insbesondere die in Polyurethanzusammensetzungen üblicherweise eingesetzten Hilfs- und Zusatzstoffe enthalten, beispielsweise die Folgenden:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln;
- Fasern, beispielsweise aus Polyethylen;
- Pigmente, beispielsweise Titandioxid oder Eisenoxide;
- Katalysatoren, welche die Hydrolyse der Aldiminogruppen beschleunigen, insbesondere Säuren, insbesondere organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, insbesondere Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris-(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer, insbesondere Verdickungsmittel oder Thixotropiermittel, zum Beispiel Harnstoffverbindungen, Polyamidwachse, Bentonite oder pyrogene Kieselsäuren;
- Trocknungsmittel, wie beispielsweise Molekularsiebe, Calciumoxid, hochreaktive Isocyanate wie p-Tosylisocyanat, monomere Diisocyanate, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz der weiteren Bestandteile der Zusammensetzung darauf zu achten, dass diese die Lagerstabilität der Zusammensetzung nicht stark beeinträchtigen. Dies bedeutet insbesondere, dass sie kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die einkomponentige Zusammensetzung **EZ** mindestens einen Katalysator. Der Katalysator ist insbesondere eine Metallverbindung und/oder eine tertiäre Aminogruppen enthaltende Verbindung und/oder eine der genannten Säuren, wie Benzoesäure oder Salicylsäure.

Bevorzugt enthält die einkomponentige Zusammensetzung **EZ** weiterhin mindestens einen Füllstoff.

Die einkomponentige Zusammensetzung **EZ** ist bei Raumtemperatur lagerstabil, d.h. sie kann in einer geeigneten Verpackung oder Anordnung, wie beispielsweise einem Fass, einem Eimer, einem Beutel, einer Kartusche oder einer Flasche über einen Zeitraum von mehreren Monaten aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Die einkomponentige Zusammensetzung **EZ** wird bevorzugt so eingesetzt, dass sie in zwei Stufen aushärtet, wobei in der ersten Aushärtungsstufe eine vorvernetzte Zusammensetzung **VZ** mit insbesondere vorwiegend plastischen Eigenschaften gebildet wird, welche unter geeigneten Bedingungen lagerstabil ist; in der zweiten Aushärtungsstufe entsteht dann eine ausgehärtete Zusammensetzung **AZ** mit insbesondere vorwiegend elastischen Eigenschaften.

In der ersten Aushärtungsstufe kommt die einkomponentige Zusammensetzung **EZ** in Kontakt mit Feuchtigkeit. Die Isocyanatgruppen des Polyurethanpolymers **PUP** und gegebenenfalls in der Zusammensetzung vorhandene weitere freie Isocyanatgruppen - im folgenden als "zugängliche" Isocyanatgruppen bezeichnet - reagieren bei Kontakt mit Feuchtigkeit mit den hydrolysierenden blockierten Aminogruppen des blockierten Amins **BA.** Die Isocyanatgruppen des oberflächendesaktivierten Polyisocyanates **DI** reagieren hingegen nicht, sofern dieses nicht aktiviert wurde. Aus der Reaktion der hydrolysierenden blockierten Aminogruppen mit Isocyanatgruppen wird ein Keton oder insbesondere ein Aldehyd freigesetzt. Die Reaktion der hydrolysierenden blockierten Aminogruppen mit Isocyanatgruppen muss dabei nicht zwingend über freie Aminogruppen erfolgen, sondern es sind auch Reaktionen mit Zwischenstufen der Hydrolyse möglich. So kann beispielsweise eine hydrolysierende Aldiminogruppe in Form einer Halbaminal-Gruppe mit einer Isocyanatgruppe reagieren. Die gegenüber den zugänglichen Isocyanatgruppen überschüssigen blockierten Aminogruppen bleiben als solche oder als - zumindest partiell - hydrolysierte blockierte Aminogruppen bestehen.

Bevorzugt liegt die Temperatur bei der ersten Aushärtungsstufe unterhalb von 50 °C, insbesondere bei Raumtemperatur bis 40 °C.

Bei der zweiten Aushärtungsstufe liegt die Temperatur insbesondere im Bereich von 60 °C bis 160 °C, bevorzugt von 80 °C bis 140 °C, besonders bevorzugt von 90 °C bis 130 °C.

Die für die Hydrolyse der blockierten Aminogruppen benötigte Feuchtigkeit kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, insbesondere in Form einer wasserhaltigen Paste, die beispielsweise über einen Statikmischer eingemischt wird.

Bevorzugt stellt die Feuchtigkeit Luftfeuchtigkeit oder in die Zusammensetzung eingemischtes Wasser, insbesondere in Form einer Wasser enthaltenden Paste, dar.

Besonders bevorzugt stellt die Feuchtigkeit Luftfeuchtigkeit dar

Aus der einkomponentigen Zusammensetzung **EZ** entsteht, wie bereits erwähnt, in der ersten Aushärtungsstufe eine vorvernetzte Zusammensetzung **VZ.**

Ein weiterer Gegenstand der vorliegenden Erfindung ist daher eine vorvernetzte Zusammensetzung **VZ,** umfassend
a') mindestens ein polymeres blockiertes Amin **PBA** mit mindestens zwei blockierten, hydrolytisch aktivierbaren Aminogruppen, welches erhalten wird aus der Reaktion von mindestens einem Isocyanatgruppen aufweisenden Polyurethanpolymer **PUP** mit mindestens einem blockierten Amin **BA** und Feuchtigkeit;
c) mindestens ein bei Raumtemperatur festes, oberflächendesaktiviertes Polyisocyanat **DI**; und
d) Feuchtigkeit.

Die Feuchtigkeit stammt entweder aus der Luft, ist also in Form von Luftfeuchtigkeit in die vorvernetzte Zusammensetzung **VZ** - insbesondere während deren Entstehung aus der einkomponentigen Zusammensetzung **EZ-**, hineindiffundiert, und/oder sie stammt aus einer Wasser enthaltenden Komponente, welche in die der vorvernetzten Zusammensetzung **VZ** zugrunde liegende einkomponentige Zusammensetzung **EZ** eingemischt wurde.

Um die vorvernetzte Zusammensetzung **VZ** mittels Wärme auszuhärten, ist die Anwesenheit von Feuchtigkeit notwendig, damit die in der vorvernetzten Zusammensetzung vorhandenen blockierten Aminogruppen mit den aktivierten Isocyanatgruppen des oberflächendesaktivierten Polyisocyanates **DI** reagieren. Eine besonders schnelle Aushärtung der vorvernetzten Zusammensetzung **VZ** wird dann erreicht, wenn die vorvernetzte Zusammensetzung **VZ** mindestens die zur Hydrolyse der blockierten Aminogruppen notwendige Feuchtigkeit bereits enthält.

Die vorvernetzte Zusammensetzung **VZ** ist lagerstabil, solange das oberflächendesaktivierte Polyisocyanat **DI** im oberflächendesaktivierten Zustand verbleibt, d.h. nicht aktiviert wird. Sie ist insbesondere lagerstabil, solange sie bei einer Temperatur unterhalb von 50 °C, insbesondere bei Raumtemperatur bis 40 °C, aufbewahrt wird. Die vorvernetzte Zusammensetzung **VZ** weist insbesondere vorwiegend plastische Eigenschaften auf. Unter "plastischen Eigenschaften" werden in diesem Dokument auch thermoplastische Eigenschaften verstanden. Je nach Art der in der vorvernetzten Zusammensetzung **VZ** vorhandenen Substanzen kann sie bei Raumtemperatur von weicher, insbesondere weich-pastöser Konsistenz sein, oder sie kann eine hochviskos-plastische bis feste, thermoplastische Konsistenz mit einer wenig klebrigen Oberfläche aufweisen.

Um eine vorvernetzte Zusammensetzung **VZ** mit einer hochviskosplastischen bis festen, thermoplastischen Konsistenz mit einer wenig klebrigen Oberfläche zu erhalten, kann es vorteilhaft sein, wenn die Zusammensetzung ein Material enthält, welches bei Raumtemperatur fest ist und nicht weit über Raumtemperatur schmilzt, beispielsweise im Bereich von 40 bis 80 °C. Dies kann insbesondere ein Polyurethanpolymer **PUP** sein, zu dessen Herstellung zumindest teilweise ein bei Raumtemperatur festes Polyol, insbesondere ein Polyester- oder Polycarbonatdiol, mit einem Schmelzpunkt im Bereich von beispielsweise 40 °C bis 80 °C, insbesondere 50 °C bis 70 °C, verwendet wurde.

Bevorzugt enthält die vorvernetzte Zusammensetzung **VZ** zu dem Zeitpunkt, wo sie zur weiteren Aushärtung erwärmt wird, Feuchtigkeit in mindestens stöchiometrischer Menge bezogen auf die Anzahl Isocyanatgruppen des oberflächendesaktivierten Polyisocyanats **PI.**

Zur weiteren Aushärtung der vorvernetzten Zusammensetzung **VZ** wird diese in einer zweiten Aushärtungsstufe auf eine geeignete Temperatur erwärmt, wobei eine ausgehärtete Zusammensetzung **AZ** mit insbesondere vorwiegend elastischen Eigenschaften entsteht. Dieser Vorgang wird im Folgenden auch als "Nachvernetzung" bezeichnet.

Beim Erwärmen der vorvernetzten Zusammensetzung **VZ** auf eine Temperatur im Bereich von 60 °C bis 160 °C, bevorzugt von 80 °C bis 140 °C, besonders bevorzugt von 90 °C bis 130 °C, wird die Schutzschicht des oberflächendesaktivierten Polyisocyanats **DI** soweit beschädigt, dass dessen Isocyanatgruppen aktiviert und somit für die in der vorvernetzten Zusammensetzung **VZ** vorliegenden hydrolysierten bzw. hydrolysierenden blockierten Aminogruppen zugänglich werden; letztere reagieren in der gleichen Weise mit den Isocyanatgruppen wie bereits bei der ersten Aushärtungsstufe beschrieben, und die ihnen gegenüber überschüssigen Isocyanatgruppen reagieren direkt mit Feuchtigkeit. Die Beschädigung der Schutzschicht des oberflächendesaktivierten Polyisocyanates **DI** ist irreversibel; die Aktivierung der Isocyanatgruppen bleibt deshalb auch nach einem eventuellen Abkühlen der Zusammensetzung bestehen. Die Nachvernetzung läuft also auch dann vollständig ab, wenn die vorvernetzte Zusammensetzung **VZ** nur relativ kurz erwärmt wird. Eine Öffnung des Uretdion-Rings von 2,4-TDI-Uretdion unter Freisetzung von weiteren Isocyanatgruppen wurde bis zu einer Temperatur von 130 °C nicht beobachtet.

Die für die Hydrolyse der blockierten Aminogruppen notwendige Feuchtigkeit ist entweder bereits vollständig in der Zusammensetzung vorhanden, beispielsweise weil sie aus der Umgebung in Form von Luftfeuchtigkeit in die vorvernetzte Zusammensetzung **VZ** eingedrungen ist, oder weil sie der einkomponentigen Zusammensetzung **EZ,** wie bereits beschrieben, in Form von Wasser zugeführt worden war, oder sie dringt allmählich aus der Luft in die mit Wärme aktivierte Zusammensetzung ein. Wenn die zur Hydrolyse der blockierten Aminogruppen notwendige Feuchtigkeit in der vorvernetzten Zusammensetzung **VZ** bereits soweit vorhanden ist, um alle oder einen überwiegenden Teil der vorliegenden blockierten Aminogruppen zu hydrolysieren, so erfolgt die Nachvernetzung beim Erwärmen sehr rasch. Reicht hingegen die vorhandene Feuchtigkeitsmenge dafür nicht aus, so erfolgt die Nachvernetzung langsamer und von aussen nach innen, da zur vollständigen Reaktion der blockierten Aminogruppen etwas Luftfeuchtigkeit in die Zusammensetzung eindringen muss. Als Resultat dieser Reaktionen entsteht die ausgehärtete Zusammensetzung **AZ** in Form eines festen Materials mit insbesondere vorwiegend elastischen Eigenschaften.

Die für die Nachvernetzung notwendige Wärme kann mit jeder beliebigen Energiequelle erzeugt werden. Geeignete Mittel zur Erwärmung sind insbesondere Umluftöfen, Heissluftgebläse oder Infrarotstrahler. Falls mindestens eines der Substrate, mit welchem die Zusammensetzung in Kontakt ist, ferromagnetisch ist und/oder die Zusammensetzung ein piezoelektrisches, ferromagnetisches oder superparamagnetisches Material enthält, kann die Erwärmung auch durch Anlegen von magnetischen und/oder elektrischen Wechselfeldern, insbesondere Mikrowellen oder Induktion, erfolgen; dies erlaubt ein besonders rasches Erwärmen der beschriebenen Zusammensetzungen.

Die einkomponentige Zusammensetzung **EZ** kann grundsätzlich auch auf andere Weise als in den beschriebenen zwei Aushärtungsstufen ausgehärtet werden.

Die Zusammensetzung kann nämlich auch ausgehärtet werden, indem sie schon vor ihrer Applikation erwärmt und erst später appliziert, d.h. mit Feuchtigkeit in Kontakt gebracht, wird. Die Erwärmung kann dabei zu einem beliebigen Zeitpunkt vor der Applikation erfolgen. Durch die Erwärmung auf eine Temperatur im Bereich von 60 °C bis 160 °C, bevorzugt von 80 °C bis 140 °C, besonders bevorzugt von 90 °C bis 130 °C, wird das oberflächendesaktivierte Polyisocyanat **DI** frühzeitig aktiviert und dessen Isocyanatgruppen damit für chemische Reaktionspartner genauso zugänglich wie die Isocyanatgruppen des Polyurethanpolymers **PUP.** Mittels Feuchtigkeit härtet die so vorbehandelte Zusammensetzung deshalb nach ihrer Applikation in einer Stufe aus, wobei direkt die ausgehärtete Zusammensetzung **AZ** entsteht. Stammt die zur Aushärtung benötigte Feuchtigkeit aus der Luft, so erfolgt hierbei die Aushärtung von aussen nach innen.

Die Zusammensetzung kann auch ausgehärtet werden, indem sie noch während oder kurz nach ihrer Applikation auf eine Temperatur im Bereich von 60 °C bis 160 °C, bevorzugt von 80 °C bis 140 °C, besonders bevorzugt von 90 °C bis 130 °C, erwärmt wird. Auch bei diesem Vorgehen wird das oberflächendesaktivierte Polyisocyanat **DI** frühzeitig aktiviert und dessen Isocyanatgruppen damit für chemische Reaktionspartner genauso zugänglich wie die Isocyanatgruppen des Polyurethanpolymers **PUP.** Mittels Feuchtigkeit härtet die Zusammensetzung deshalb nach ihrer Applikation in Abhängigkeit des Erwärmungszeitpunkts mehr oder weniger direkt zur ausgehärteten Zusammensetzung **AZ** aus. Bevorzugt wird bei dieser Verwendung die zur Aushärtung benötigte Feuchtigkeit bei der Applikation in die Zusammensetzung eingemischt, insbesondere in Form einer Wasser enthaltenden Paste. Durch die sofortige Verfügbarkeit des Wassers erfolgt hierbei die Aushärtung der Zusammensetzung bei ihrer Erwärmung sehr rasch.

Die einkomponentige Zusammensetzung **EZ** zeichnet sich dadurch aus, dass sie bei Raumtemperatur oder leicht erhöhter Temperatur, d.h. typischerweise unter 50°C, eine gute Lagerstabilität aufweist und gut applizierbar ist. Sie härtet mittels Feuchtigkeit in einer ersten Aushärtungsstufe zu einer vorvernetzten Zusammensetzung **VZ,** welche unterhalb von 50 °C während einigen Wochen bis Monaten lagerstabil und transportfähig ist. Die vorvernetzte Zusammensetzung **VZ** weist eine deutlich höhere Viskosität als die ihr zugrunde liegende einkomponentige Zusammensetzung **EZ** auf. Je nach den in ihr enthaltenen Bestandteilen weist die vorvernetzte Zusammensetzung **VZ** vorteilhaft eine weich-pastöse, hochviskos-plastische oder feste, thermoplastische Konsistenz und eine deutlich klebrige, schwach klebrige oder gar nicht klebrige Oberfläche auf. Eine solche vorvernetzte Zusammensetzung **VZ** kann als Modulkörper zusammen mit dem Substrat, auf welches sie appliziert wurde, gelagert werden und erst zu einem späteren Zeitpunkt mit einem zweiten Substrat kontaktiert und mittels Wärme unter Verklebung der zwei Substrate ausgehärtet werden. Für eine solche Anwendung ist es entscheidend, dass die vorvernetzte Zusammensetzung **VZ** auch nach längerer Lagerung im vorvernetzten Zustand bei ihrer Nachvernetzung eine gute Haftung zum zweiten Substrat aufbaut, mit welchem sie bei der Nachvernetzung in Kontakt gebracht wird.

Wird die vorvernetzte Zusammensetzung **VZ** wie beschrieben erwärmt, härtet diese sehr schnell zu einem Material mit insbesondere vorwiegend elastischen Eigenschaften aus und neigt dabei insbesondere nicht zur Bildung von Blasen. Sie weist schon kurze Zeit nach dem Erwärmen eine so hohe Festigkeit auf, dass sie bearbeitet oder belastet werden kann, beispielsweise durch Begehen, durch Abschleifen, durch Transport oder durch die Entfernung von fixierenden Halterungen. Die ausgehärtete Zusammensetzung **AZ** verfügt insbesondere über eine hohe Festigkeit und eine hohe Dehnung bei vorwiegend elastischen Eigenschaften.

Weiterhin zeichnet sich die einkomponentige Zusammensetzung **EZ** dadurch aus, dass sie wahlweise auch in einer einzigen Aushärtungsstufe ausgehärtet werden kann, indem sie vor, während oder kurz nach der Applikation erwärmt wird. Dabei wird dieselbe ausgehärtete Zusammensetzung **AZ** mit denselben mechanischen Eigenschaften gebildet, wie in der beschriebenen zweistufigen Aushärtung.

Ein zusätzlicher Vorteil besteht bei der ausschliesslichen Verwendung von Polyaldiminen **PA1** als blockiertes Amin **BA.** Diese besonders bevorzugten einkomponentigen Zusammensetzungen **EZ** sind vor, während und nach der ersten und der zweiten Aushärtungsstufe geruchsarm oder geruchsfrei, und der bei der Aushärtung frei werdende Aldehyd verbleibt weitgehend in der vorvernetzten Zusammensetzung **VZ,** beziehungsweise in der ausgehärteten Zusammensetzung **AZ,** wodurch diese kaum Schwund aufweisen. Eine geruchsarme oder geruchsfreie Aushärtung ist für viele Anwendungen, insbesondere in Innenräumen, ein grosser Vorteil, wenn nicht sogar eine Voraussetzung.

Eine in zwei Stufen aushärtbare einkomponentige Zusammensetzung, wie sie vorgängig beschrieben wurde, ist geeignet als Klebstoff- oder Dichtstoff, insbesondere als elastischer Klebstoff für Industrieanwendungen, beispielsweise für die Montage von Fahrzeugen wie Automobilen, Transportfahrzeugen und Schiffen.

Insbesondere ist eine solche Zusammensetzung geeignet als elastischer Klebstoff für Anwendungen, bei welcher der Klebstoff auf ein Substrat vorappliziert und mittels Feuchtigkeit vorvernetzt wird, und der Verbund aus Substrat und vorvernetztem Klebstoff gelagert und transportiert wird, bevor er mit einem weiteren Substrat kontaktiert und mittels Einwirkung von Wärme ausgehärtet wird. Der vorvernetzte Klebstoff kann dabei unmittelbar vor, während und/oder kurz nach dem Fügen erwärmt werden.

Beim Substrat, auf welches der Klebstoff vorappliziert und mittels Feuchtigkeit vorvernetzt wird, kann es sich beispielsweise um ein Bauteil eines Automobils, Transportfahrzeugs, Schiffs oder eines anderen industriellen Guts handeln. Dabei kann die Applikation des Klebstoffs und die erste Aushärtungsstufe zur vorvernetzten Zusammensetzung insbesondere beim Hersteller eines solchen Bauteils erfolgen. Anschliessend kann das Bauteil komplett mit der vorvernetzten Zusammensetzung beim Hersteller eines Automobils, Transportfahrzeugs, Schiffs oder eines anderen industriellen Guts angeliefert werden und dort mit einem weiteren Bauteil unter Erwärmen der vorvernetzten Zusammensetzung schnell und einfach gefügt und verklebt werden, wobei letztere zum ausgehärteten Klebstoff mit insbesondere vorwiegend elastischen Eigenschaften aushärtet. Dieses Vorgehen erspart es dem Hersteller des industriellen Guts, den Klebstoff selber auf das Bauteil zu applizieren, was Zeit und Kosten des Fügeprozesses vermindert.

Falls die einkomponentige Zusammensetzung als Klebstoff für elastische Verklebungen im Fahrzeugbau verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese bevorzugt eine im Wesentlichen runde oder dreieckige Querschnittsfläche aufweist. Geeignete Methoden zum Auftragen des Klebstoffs sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen kurzen Faden, so dass das Substrat nicht verschmutzt wird.

Elastische Verklebungen im Fahrzeugbau sind beispielsweise das Ankleben von Teilen, wie Kunststoffabdeckungen, Zierleisten, Flanschen, Stosstangen, Führerkabinen oder anderen Anbauteilen, an die lackierte Karosserie, oder das Einkleben von Scheiben in die Karosserie. Als Fahrzeuge genannt werden sollen beispielsweise Automobile, Lastkraftwagen, Busse, Schienenfahrzeuge und Schiffe.

Ein weiterer Aspekt der vorliegenden Erfindung betrifft ein Verfahren zum Verkleben von einem Substrat **S1** mit einem Substrat **S2,** welches die Schritte umfasst
i) Applikation einer einkomponentigen Zusammensetzung, wie vorgängig im Detail beschreiben, auf ein Substrat **S1** und Kontaktieren der Zusammensetzung mit Feuchtigkeit bei einer Temperatur unterhalb von 50 °C, so dass eine vorvernetzte Zusammensetzung entsteht;
ii) Aufheizen der vorvernetzten Zusammensetzung mit einer geeigneten Methode auf eine Temperatur im Bereich von 60 °C bis 160 °C, bevorzugt von 80 °C bis 140 °C, besonders bevorzugt von 90 °C bis 130 °C; und
iii) Kontaktieren der vorvernetzten Zusammensetzung mit einem Substrat **S2;**
wobei die Schritte ii) und iii) auch gleichzeitig oder in umgekehrter Reihenfolge erfolgen können, und
wobei das Substrat **S2** aus dem gleichen oder einem unterschiedlichen Material wie das Substrat **S1** besteht.

In diesem Verfahren sind geeignete Substrate **S1** und/oder **S2** insbesondere
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites;
- Kunststoffe wie Polyvinylchlorid (Hart- und Weich-PVC), Acrylonitril-Butadien-Styrol-Copolymere (ABS), SMC (Sheet Moulding Compounds), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Aus diesem beschriebenen Verfahren zum Verkleben - beziehungsweise aus der Verwendung der beschriebenen Zusammensetzung als Klebstoff - entsteht ein Artikel.

Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie.

Ein weiterer Aspekt der vorliegenden Erfindung betrifft einen Modulkörper 2, welcher aus einem Substrat **S1** 11 und einer darauf befindlichen vorvernetzten Zusammensetzung 5', welche aus einer vorgängig im Detail beschriebenen einkomponentigen Zusammensetzung und der Einwirkung von Feuchtigkeit 9 erhalten wurde, besteht. Dieser Modulkörper kann unter der Einwirkung von Wärme und durch Kontaktieren mit einem zweiten Substrat einen Verbundkörper bilden. Durch die Wärme wird die vorvernetzte Zusammensetzung ausgehärtet.

Ein weiterer Aspekt der vorliegenden Erfindung betrifft einen Verbundkörper 3, welcher aus einem Substrat **S1** 11, einem Substrat **S2** 12 und einer sich zwischen Substrat **S1** und Substrat **S2** befindlichen ausgehärteten Zusammensetzung 5", welche aus einer vorgängig im Detail beschriebenen einkomponentigen Zusammensetzung und der Einwirkung von Wärme 8 und Feuchtigkeit 9 erhalten wurde, besteht. Wie vorgängig beschrieben, bestehen für den Zeitpunkt und die Reihenfolge der Wärme- und FeuchtigkeitsEinwirkung auf die Zusammensetzung unterschiedliche Möglichkeiten. Insbesondere führt die Einwirkung von Feuchtigkeit in Form von Luftfeuchtigkeit nach der Applikation einer vorgängig beschriebenen einkomponentigen Zusammensetzung 5 auf ein Substrat **S1** 11 zu einem Modulkörper 2 welcher dann unter der Einwirkung von Wärme und durch Kontaktieren mit einem Substrat **S2** 12 zur Bildung eines Verbundkörpers 3 führt.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: eine Aufsicht auf eine Windschutzscheibe eines Automobils
- Fig. 2: eine Querschnittsansicht durch eine Windschutzscheibe gemäss Fig. 1
- Fig. 3: eine Aufsicht auf einen Modulkörper (Windschutzscheibe mit vorvernetztem Klebstoff)
- Fig. 4: eine Querschnittsansicht durch einen Modulkörper gemäss Fig. 3
- Fig. 5: eine Querschnittsansicht durch einen Stapel von Modulkörpern gemäss Fig. 3 bzw. Fig. 4
- Fig. 6: eine Querschnittsansicht durch einen Verbundkörper (eingebaute Windschutzscheibe mit ausgehärtetem Klebstoff)
- Fig.7: eine Querschnittsansicht durch einen Modulkörper mit Kantenummantelung
- Fig.8: eine Querschnittsansicht durch einen Verbundkörper (eingebaute Windschutzscheibe mit ausgehärtetem Klebstoff)

Die Zeichnungen sind schematisch. Es sind nur die für das unmittelbare Verständnis der Erfindung wesentlichen Elemente gezeigt.

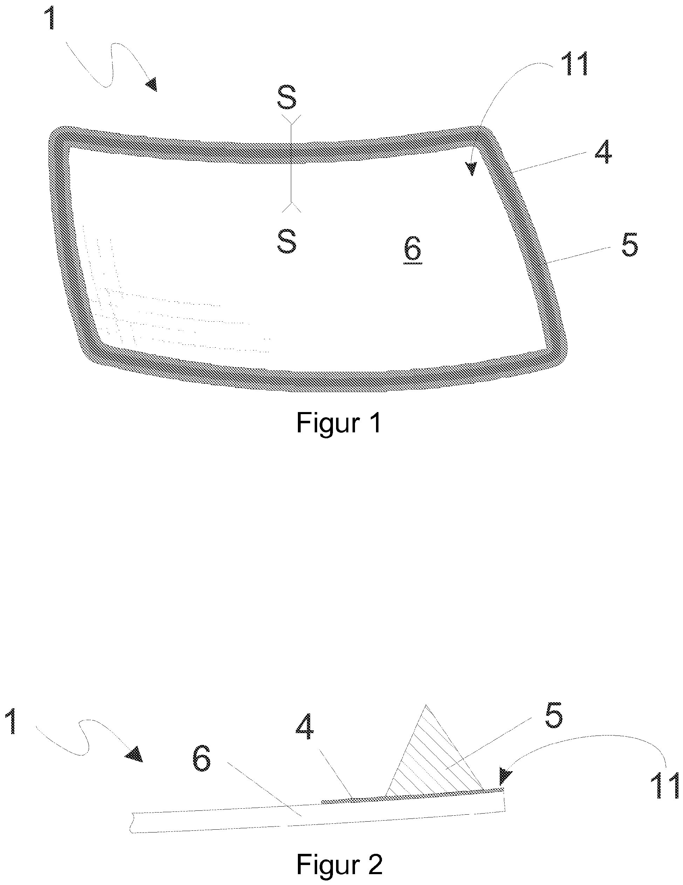

Figur 1 zeigt schematisch eine Windschutzscheibe 1 eines Automobils, welche aufgebaut ist aus einer Glasscheibe 6, welche an ihrem äusseren Rand mit einer Glaskeramik 4 beschichtet ist, worauf eine einkomponentige Zusammensetzung 5, wie sie vorgängig beschrieben wurde, als Klebstoff in Form einer Dreiecksraupe appliziert worden ist. Die Glasscheibe 6 mit der Glaskeramik 4 stellt das Substrat **S1** 11 dar.

Figur 2 zeigt schematisch einen Querschnitt durch einen Teil der Windschutzscheibe 1 aus Figur 1 entlang der Linie S-S.

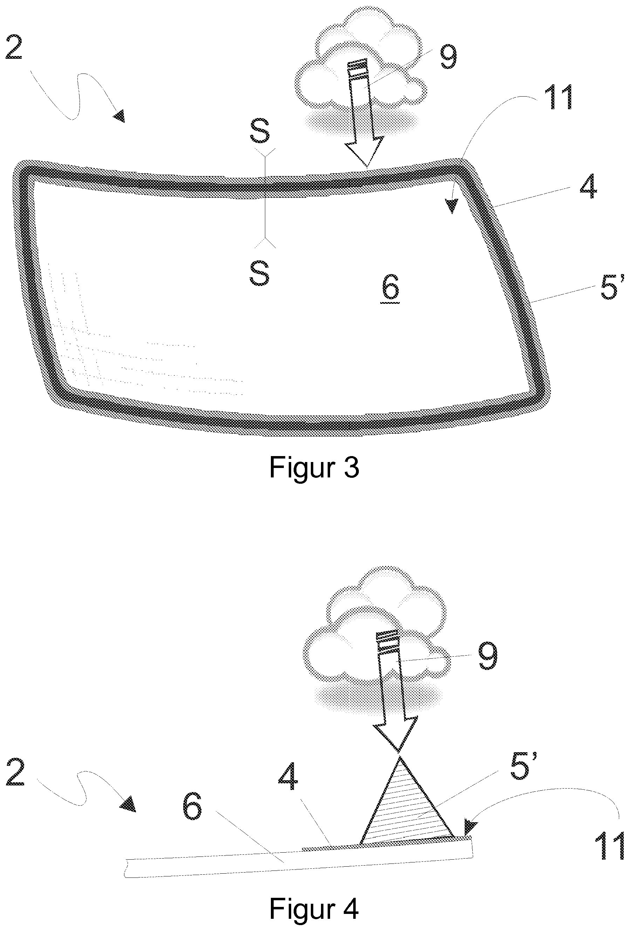

Unter der Einwirkung von Feuchtigkeit 9 entsteht aus der einkomponentigen Zusammensetzung 5 eine vorvernetzte Zusammensetzung 5'. Figur 3 zeigt schematisch einen derartigen Modulkörper 2, welcher aus dem Substrat **S1** 11 und der darauf befindlichen vorvernetzten Zusammensetzung 5' besteht.

Figur 4 zeigt schematisch einen Querschnitt durch einen Teil des Modulkörpers 2 aus Figur 3 entlang der Linie S-S. Dies entspricht der Situation der Figur 2 nach der Einwirkung von Feuchtigkeit 9.

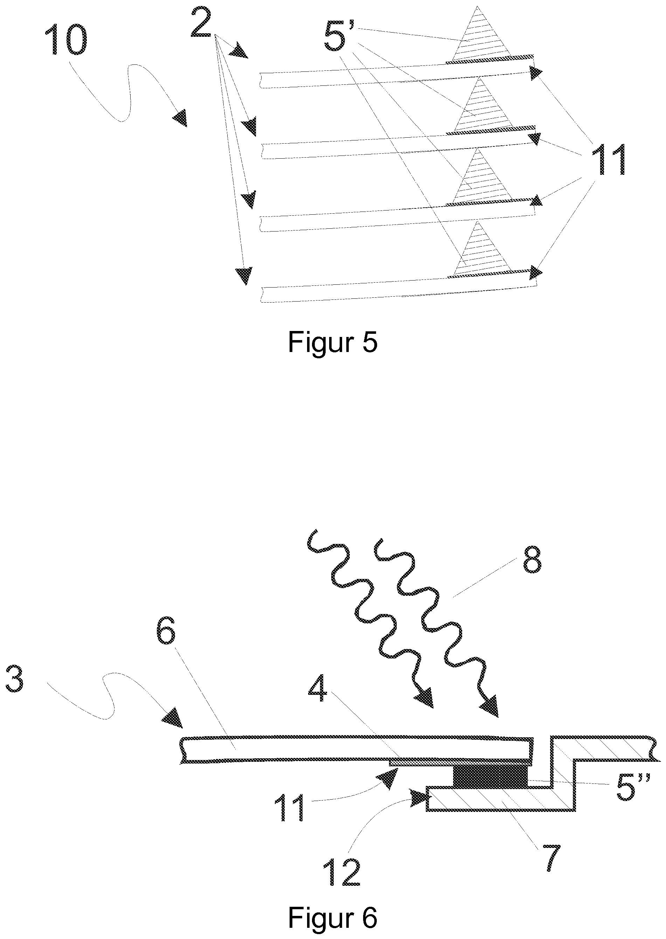

Dieser Modulkörper 2, kann nun über längere Zeit gelagert werden, ohne dass sich seine Eigenschaften wesentlich verändern. Die vorvernetzte Zusammensetzung 5' haftet auf dem Substrat **S1** 11, d.h. Glaskeramik 4, bzw. Glasscheibe 6, und weist insbesondere eine klebfreie Oberfläche auf. Weiterhin ist die vorvernetzte Zusammensetzung 5' insbesondere so formstabil, dass einzelne Modulkörper 2 aufeinander gestapelt werden können. Figur 5 zeigt eine Querschnittsansicht durch einen derartigen Stapel 10 von Modulkörpern 2. Die vorvernetzte Zusammensetzung 5' dient beim Stapeln als Abstandhalter, damit die einzelnen Glasscheiben nicht miteinander in Berührung kommen und dadurch zerkratzen.

Der Modulkörper 2 kann transportiert werden und bei Bedarf weiter verwendet werden. Zwischen der Applikation der einkomponentigen Zusammensetzung 5 und der weiteren Verwendung des Modulkörpers 2 kann eine im Prinzip beliebig lange Zeitspanne, insbesondere eine Zeitspanne von 1 Woche bis 2 Monaten, verstreichen. Zur weiteren Verwendung kann der Modulkörper 2 in eine Karosserie eingebaut werden. Beim Einbau wurde in der in Figur 6 gezeigten Variante die vorvernetzte Zusammensetzung 5' mit dem Flansch der Karosserie 7 kontaktiert, verpresst und durch Einwirkung von Wärme 8 ausgehärtet, wodurch die ausgehärtete Zusammensetzung 5", das Substrat **S1** 11 und das Substrat **S2** 12 einen Verbundkörper 3 bilden.

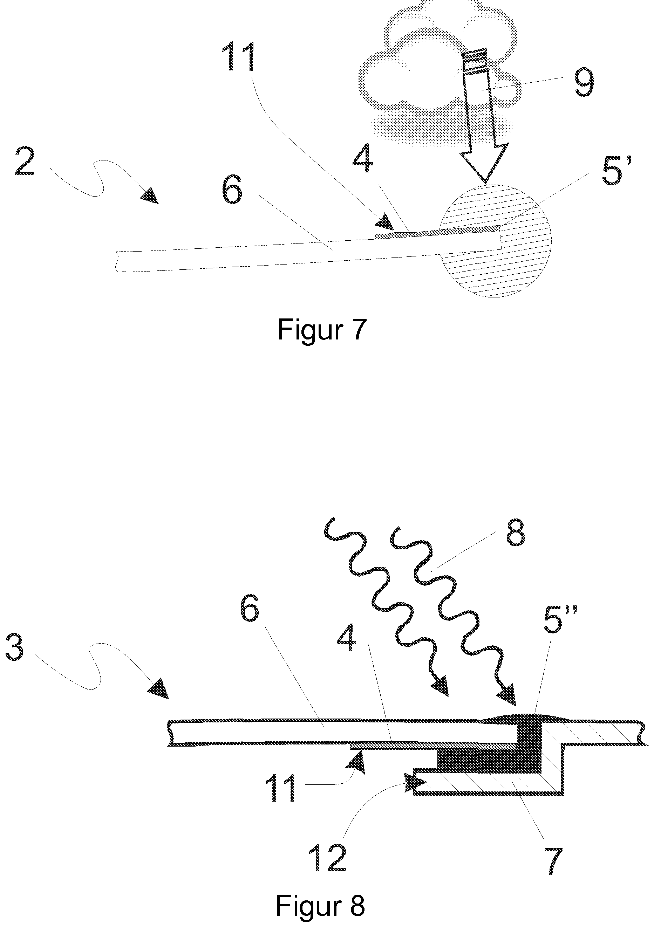

Figur 7 zeigt schematisch einen Querschnitt durch einen Modulkörper 2 in Form einer Windschutzscheibe, an deren Rand die vorvernetzte Zusammensetzung 5' bei ihrer Applikation auf das Substrat **S1** 11, d.h. auf die Glasscheibe 6, bzw. Glaskeramik 4, als Kantenumhüllung aufgetragen worden ist. Diese Ausführungsform eignet sich insbesondere für Anwendungen, bei welchen die Scheibe von mehreren Seiten, also auch an der Stirnseite, mit einem Substrat verklebt wird, und/oder bei welchen der überschüssige Klebstoff als Dichtungsmasse für die Fuge zwischen Windschutzscheibe und Karosserie verwendet wird.

Diese Art der Verklebung wird insbesondere beim bündigen Verkleben einer Automobilscheibe, dem so genannten "Flush Glazing", eingesetzt, wie es in Figur 8 in einem Querschnitt dargestellt ist, verwendet. Hierbei wird die vorvernetzte Zusammensetzung 5' mit dem Flansch der Karosserie 7 kontaktiert, verpresst und durch Einwirkung von Wärme 8 ausgehärtet, wodurch die ausgehärtete Zusammensetzung 5", das Substrat **S1** 11 und das Substrat **S2** 12 einen Verbundkörper 3 bilden.

**Bezugszeichenliste**

| | | | |
|---|---|---|---|
| 1 | Windschutzscheibe mit appliziertem Klebstoff | 6 | Glasscheibe |
| | | 7 | Flansch der Karosserie |
| 2 | Modulkörper | 8 | Einwirkung von Wärme |
| 3 | Verbundkörper | 9 | Einwirkung von Feuchtigkeit |
| 4 | Glaskeramik | 10 | Stapel von Modulkörpern 2 |
| 5 | einkomponentige Zusammensetzung | 11 | Substrat **S1** |
| 5' | vorvernetzte Zusammensetzung | 12 | Substrat **S2** |
| 5" | ausgehärtete Zusammensetzung | | |

### Beispiele

Als "Normklima" wird eine Temperatur von 23±1 °C und eine relative Luftfeuchtigkeit von 50±5% bezeichnet. "RT" steht für Raumtemperatur.

### 1. Beschreibung der Messmethoden

Der **Amingehalt,** das heisst der totale Gehalt an blockierten (Aldiminogruppen) und freien Aminogruppen in den hergestellten Verbindungen, wurde titrimetrisch bestimmt (mit 0.1N HClO₄ in Eisessig, gegen Kristallviolett) und ist stets angegeben in mmol N/g.

### 2. Herstellung von blockierten Aminen

### Aldimin A-1

In einem Rundkolben wurden unter Stickstoffatmosphäre 625 g 2,2-Dimethyl-3-lauroyloxy-propanal vorgelegt. Unter kräftigem Rühren wurden aus einem Eintropftrichter 334.2 g Polyethertriamin (Jeffamine^{®} T-403, Huntsman; Amingehalt 6.29 mmol N/g) langsam zugegeben. Danach wurden die flüchtigen Bestandteile im Vakuum entfernt (10 mbar, 80 °C). Ausbeute: 921 g klare, blassgelbe Flüssigkeit mit einem Amingehalt von 2.28 mmol N/g.

### Aldimin A-2

In einem Rundkolben wurden unter Stickstoffatmosphäre 743 g 2,2-Dimethyl-3-lauroyloxy-propanal vorgelegt. Unter kräftigem Rühren wurden aus einem Eintropftrichter 300 g Polyetherdiamin (Jeffamine^{®} D-230, Huntsman; Amingehalt 8.29 mmol N/g) langsam zugegeben. Danach wurden die flüchtigen Bestandteile im Vakuum entfernt (10 mbar, 80 °C). Ausbeute: 995 g klare, blassgelbe Flüssigkeit mit einem Amingehalt von 2.53 mmol N/g.

### 3. Herstellung des Polyurethanpolymers

### Polymer P-1

400 g Polyoxypropylen-Diol (Acclaim^{®} 4200 N, Bayer; OH-Zahl 28.5 mg KOH/g) und 52 g 4,4'-Methylendiphenyldiisocyanat (4,4'-MDI; Desmodur^{®} 44 MC L, Bayer) wurden nach bekanntem Verfahren bei 80 °C zu einem NCOterminierten Polyurethanpolymeren mit einem Gehalt an freien IsocyanatGruppen von 1.90 Gewichts-% umgesetzt.

### 4. Herstellung des oberflächendesaktivierten Polyisocyanats

### Isocyanatpaste DI-1

In einem Dispergiergerät wurden 40 g feinteiliges dimeres 2,4-Toluylendiisocyanat (Addolink^{®} TT, RheinChemie; Teilchengrösse ca. 5-50 µm, dispergiert. Dazu wurden 6.6 g Polyamidoamin (Euretek^{®} 531, Huntsman; Aminzahl 195 mg KOH/g) gegeben und die Mischung durch erneutes Dispergieren zu einer feinen Paste verarbeitet.

### 5. Herstellung von einkomponentigen, zweistufig aushärtbaren Klebstoffen

### Klebstoff K-1 und Klebstoff K-2

In einem Vakuummischer wurden die Bestandteile der Klebstoffe ***K-1*** und ***K*-*2*** gemäss Tabelle 1 in den angegebenen Gewichtsteilen unter Feuchtigkeitsausschluss zu einer knollenfreien, homogenen Paste verarbeitet, diese jeweils unverzüglich in eine innenlackierte Aluminium-Kartusche abgefüllt und die Kartusche luftdicht verschlossen.

**Tabelle 1: Zusammensetzung der Klebstoffe K-1 und K-2.**

| | Klebstoff ***K*-*1*** | Klebstoff ***K*-*2*** |
|---|---|---|
| Polymer ***P-1*** | 33.0 | 33.0 |
| Aldimin ***A-1*** | 1.0 | 2.0 |
| Aldimin ***A-2*** | 7.0 | 6.0 |
| Palatinol^{®} Z | 18.0 | 18.0 |
| hydrophobe pyrogene Kieselsäure | 3.0 | 3.0 |
| Russ | 13.0 | 13.0 |
| Kaolin | 18.0 | 18.0 |
| Salicylsäure^{a} | 2.0 | 2.0 |
| Isocyanatpaste ***DI-1*** | 5.0 | 5.0 |

| | | |
|---|---|---|
| ^{a} 5 Gew.-% in Dioctyladipat. | | |

Die **Lagerfähigkeit** der Klebstoffe ***K-1*** und ***K-2*** wurde indirekt durch Bestimmung der Viskosität, gemessen als Auspresskraft, des Klebstoffs nach verschiedenen Lagerbedingungen im verschlossenen Gebinde charakterisiert. Dazu wurde je eine mit dem Klebstoff gefüllte Kartusche während 7 Tagen bei Raumtemperatur, während 7 Tagen bei 40 °C bzw. während 7 Tagen bei 60 °C gelagert und darauf deren Auspresskraft mittels Auspressgeräts (Zwick/Roell Z005) gemessen. Dazu wurde die Kartusche nach einer Konditionierung während 12 Stunden bei Normklima geöffnet, eine Düse mit 5 mm Innendurchmesser auf die Kartusche aufgeschraubt und dann die Kraft gemessen, die benötigt wurde, um die Zusammensetzung mit einer Auspressgeschwindigkeit von 60 mm/min durch die Düse auszupressen. Der angegebene Wert ist ein Mittelwert aus den Kräften, die nach einem Auspressweg von 22 mm, 24 mm, 26 mm und 28 mm gemessen wurden. Die Resultate sind in der Tabelle 2 dargestellt.

**Tabelle 2: Lagerfähigkeit der Klebstoffe K-1 und K-2.**

| | Klebstoff ***K*-*1*** | Klebstoff ***K-2*** |
|---|---|---|
| Auspresskraft nach 7 d RT | 415 N | 503 N |
| Auspresskraft nach 7d 40 °C | 435 N | 550 N |
| Auspresskraft nach 7d 60 °C | 483 N | 584 N |

Aus der Tabelle 2 ist ersichtlich, dass die Klebstoffe ***K-1*** und ***K-2*** während 7 Tagen bei Raumtemperatur, bei 40 °C und bei 60 °C in der verschlossenen Kartusche ohne nennenswerten Anstieg der Auspresskraft gelagert werden können.

Die **Lagerfähigkeit** der **vorvernetzten** Klebstoffe ***K-1*** und ***K-2*** wurde bestimmt, indem die Klebstoffe mittels Kartuschenpistole als Raupe auf Pappkarton aufgetragen und dem Normklima ausgesetzt wurden, so dass die erste Stufe der Aushärtung beginnen konnte (Vorvernetzung mit Luftfeuchtigkeit). Nach einem Tag im Normklima wurde geprüft, ob sich an der Oberfläche der plastischen Raupe eine "Haut", d.h. eine Schicht von vorwiegend elastischer Konsistenz, gebildet hatte oder nicht. Nach 28 Tagen im Normklima wurde geprüft, ob die Raupe immer noch eine vorwiegend plastische Konsistenz aufwies, oder ob sie zu einem Material mit vorwiegend elastischer Konsistenz ausgehärtet war. Die Klebstoffe waren dabei vorgängig in der Kartusche während 7 Tagen bei Raumtemperatur, bzw. während 7 Tagen bei 40 °C, bzw. während 7 Tagen bei 60 °C, gelagert worden. Die Resultate sind in der Tabelle 3 dargestellt.

**Tabelle 3: Lagerfähigkeit der vorvernetzten Klebstoffe K-1 und K-2 im Normklima. (NK= Normklima)**

| | Klebstoff ***K*-*1*** | | Klebstoff ***K*-*2*** | |
|---|---|---|---|---|
| vorgängige Lagerung | Konsistenz nach 1d NK | Konsistenz nach 28d NK | Konsistenz nach 1d NK | Konsistenz nach 28d NK |
| 7 d RT | ohne Haut | plastisch | ohne Haut | plastisch |
| 7d 40 °C | ohne Haut | plastisch | ohne Haut | plastisch |
| 7d 60 °C | mit Haut | elastisch | mit Haut | elastisch |

Aus der Tabelle 3 ist ersichtlich, dass die vorgängig während 7 Tagen bei RT oder bei 40 °C gelagerten Klebstoffe im Normklima zu einem vorvernetzten Material mit vorwiegend plastischer Konsistenz aushärteten und während 28 Tagen lagerstabil waren. Die vorgängig während 7 Tagen bei 60 °C gelagerten Klebstoffe jedoch bildeten nach einem Tag im Normklima eine Haut und härteten schliesslich zu einem elastischen Material aus. Dies lässt darauf schliessen, dass das oberflächendesaktivierte Polyisocyanat **DI** während der Lagerung bei 60 °C bereits aktiviert worden war, wodurch die Aushärtung bei Feuchtigkeitseinwirkung nicht in zwei getrennten Stufen, sondern direkt zum ausgehärteten elastischen Klebstoff erfolgte.

Die **Aushärtung in der zweiten Aushärtungsstufe** der vorvernetzten Klebstoffe ***K-1*** und ***K-2*** wurde charakterisiert über die Entwicklung der Zugfestigkeit in Abhängigkeit von Erwärmungsdauer und -temperatur. Dazu wurde zuerst ein 2 mm dicker Film des Klebstoffs während 7 Tagen dem Normklima ausgesetzt, wobei der vorvernetzte Klebstoff gebildet wurde. Anschliessend wurde der Film bei den in der Tabelle 4 genannten Temperaturen während der genannten Dauer im Umluftofen erwärmt, dann erneut während 7 Tagen dem Normklima ausgesetzt und schliesslich die Zugfestigkeit wie nachfolgend beschrieben gemessen. Die Resultate sind in der Tabelle 4 dargestellt.

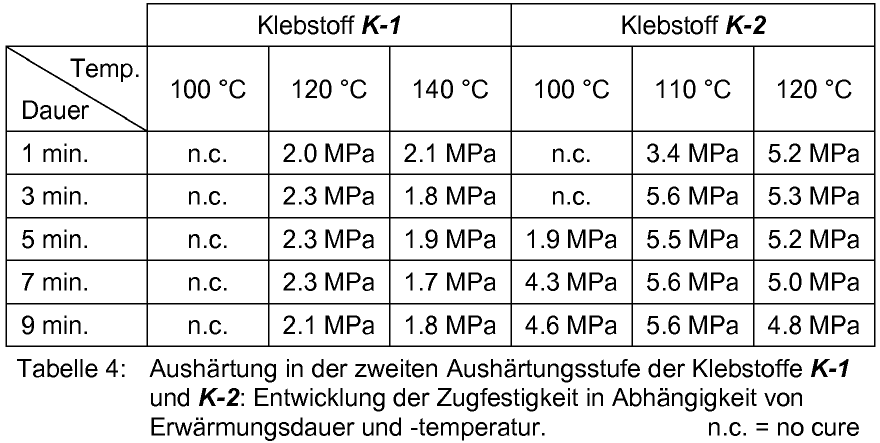

Aus der Tabelle 4 ist ersichtlich, dass die Klebstoffe ***K-1*** und ***K-2*** bei genügend langer bzw. hoher Erwärmung aushärteten. Bei zu geringer Wärmezufuhr fand eine unvollständige oder gar keine Aushärtung ("no cure") statt. Bei einer zu starken Erwärmung bildeten sich teilweise feine Bläschen, wodurch etwas geringere Werte für die Zugfestigkeit resultierten.

Weiterhin wurden die **mechanischen Eigenschaften** des ausgehärteten Klebstoffs ***K-2*** bestimmt. Dazu wurde zuerst ein 2 mm dicker Film des Klebstoffs während 7 Tagen dem Normklima ausgesetzt, wobei der vorvernetzte Klebstoff gebildet wurde. Anschliessend wurde der Film während 5 Minuten bei 120 °C im Umluftofen erwärmt und nochmals während 7 Tagen dem Normklima ausgesetzt. Aus diesem Film wurden Hanteln mit einer Länge von 75 mm, bei einer Steglänge von 30 mm und einer Stegbreite von 4 mm, ausgestanzt und diese gemäss DIN EN 53504 bei einer Zuggeschwindigkeit von 200 mm/min auf **Zugfestigkeit** (Bruchkraft), **Bruchdehnung** und **E-Modul** (bei 0.5-5% Dehnung) geprüft. Dabei wurden die folgenden Resultate erhalten:

| | | |
|---|---|---|
| Klebstoff ***K-2*:** | Zugfestigkeit: | 5.2 MPa |
| | Bruchdehnung: | 810 % |
| | E-Modul (0.5-5%): | 2.6 MPa |

Mit dem Klebstoff ***K-1*** wurde weiterhin ein **Modulkörper** und daraus ein **Verbundkörper** hergestellt.

Zur Herstellung des Modulkörpers wurde ein Glasplättchen der Dimension 40 x 100 x 6 mm auf der zu verklebenden Seite mit Sika^{®} Aktivator (erhältlich bei Sika Schweiz AG) vorbehandelt. Nach einer Ablüftezeit von 10 Minuten wurde der Klebstoff ***K-1*** als Dreiecksraupe von ca. 1 cm Durchmesser entlang der Längskante auf dem Glasplättchen aufgetragen und während 7 Tagen dem Normklima ausgesetzt, wobei der vorvernetzte Klebstoff und somit auch der Modulkörper gebildet wurde.

Anschliessend wurde ein Plättchen aus KTL-Stahl (kathodentauchlackiertes Stahlblech) auf der zu verklebenden Seite mit Sika^{®} Coating Aktivator (erhältlich bei Sika Schweiz AG) vorbehandelt. Nach einer Ablüftezeit von 10 Minuten wurde der vorvernetzte Klebstoff des Modulkörpers mit dem KTL-Plättchen belegt, auf eine Dicke von 3 bis 4 mm verpresst und während 30 Minuten in einem Umluftofen bei 120 °C ausgehärtet. Es entstand ein Verbundkörper aus Glas und KTL-Stahl mit ausgehärtetem Klebstoff ***K-2*** dazwischen. Nach 7 Tagen im Normklima wurde die Haftung zum Glas und zum KTL-Stahl geprüft, indem der Verbundkörper in einer Zugprüfmaschine so auseinandergezogen wurde, dass der Klebstoff gedehnt wurde, bis der Verbundkörper zerstört war. Dabei entstand ein zu 100% kohäsives Bruchbild. Die Haftung zum Glas und zum KTL-Stahl war also ausgezeichnet.

## Patentansprüche

1. Einkomponentige Zusammensetzung, die in zwei Stufen aushärtbar ist, wobei in der ersten Aushärtungsstufe mittels Feuchtigkeit eine vorvernetzte Zusammensetzung entsteht, und wobei in der zweiten Aushärtungsstufe mittels Wärme eine ausgehärtete Zusammensetzung entsteht, **dadurch gekennzeichnet, dass** sie
a) mindestens ein Isocyanatgruppen aufweisendes Polyurethanpolymer **PUP**;
b) mindestens ein blockiertes Amin **BA** mit mindestens zwei blockierten, hydrolytisch aktivierbaren Aminogruppen; und
c) mindestens ein bei Raumtemperatur festes, oberflächendesaktiviertes Polyisocyanat **DI** umfasst,
mit der Massgabe, dass die in der Zusammensetzung vorhandenen blockierten, hydrolytisch aktivierbaren Aminogruppen in Bezug auf die Anzahl Isocyanatgruppen des Polyurethanpolymers **PUP** im stöchiometrischen Überschuss vorliegen.

2. Einkomponentige Zusammensetzung **EZ** gemäss Anspruch 1, **dadurch gekennzeichnet, dass** das blockierte Amin **BA** ein Polyaldimin **PA** der Formel (I) ist, 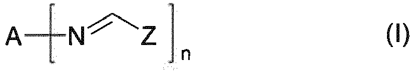 wobei
n für 2 oder 3 oder 4, bevorzugt für 2 oder 3, steht;
A für einen n-wertigen Kohlenwasserstoffrest mit 2 bis 30 C-Atomen, welcher gegebenenfalls mindestens ein Heteroatom, insbesondere in der Form von Ether-Sauerstoff oder tertiärem Amin-Stickstoff, enthält, steht; und
Z frei ist von Hydroxyl-, Mercapto- und von primären und sekundären Aminogruppen und
entweder für einen Rest Z¹ der Formel (II) steht, 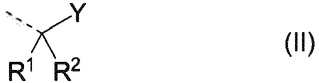 wobei
Y für einen einwertigen Kohlenwasserstoffrest mit 1 bis 32 C-Atomen steht, welcher gegebenenfalls mindestens ein Heteroatom, insbesondere Sauerstoff oder Stickstoff in der Form von Ether-, Carbonyl-, Ester-, Amido-, Harnstoff-, Urethan- oder tertiären Aminogruppen, aufweist, und
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen,
oder für einen Rest Z² steht,
wobei Z² entweder für einen substituierten oder unsubstituierten Aryl- oder Heteroaryl-Rest, welcher eine Ringgrösse von 5 bis 8, bevorzugt 6, Atomen aufweist, steht, oder für 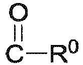 steht,
wobei R⁰ für ein Wasserstoffatom oder für einen Alkoxyrest oder für einen substituierten oder unsubstituierten Alkenyl- oder Arylalkenylrest mit mindestens 6 C-Atomen steht.

3. Einkomponentige Zusammensetzung **EZ** gemäss Anspruch 2, **dadurch gekennzeichnet, dass** das Polyaldimin **PA** ein Polyaldimin **PA1** der Formel (III) ist, 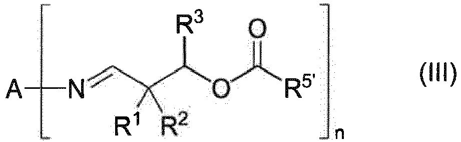 wobei
R³ für ein Wasserstoffatom oder für eine Alkylgruppe oder für eine Cycloalkylgruppe oder für eine Arylalkylgruppe mit 1 bis 12 C-Atomen steht; und
R^{5'} entweder
für einen linearen oder verzweigten Alkylrest mit 6 bis 30, insbesondere 11 bis 30, C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
oder für einen einfach oder mehrfach ungesättigten, linearen oder verzweigten Kohlenwasserstoffrest mit 6 bis 30, insbesondere 11 bis 30, C-Atomen, steht.

4. Einkomponentige Zusammensetzung **EZ** gemäss einem der Ansprüche 1 bis 3 **dadurch gekennzeichnet, dass** der mittlere Teilchendurchmesser des oberflächendesaktivierten Polyisocyanates **DI** im Bereich von 0.01 bis 100µm, bevorzugt 0.1 bis 50µm, besonders bevorzugt 0.3 bis 30 µm, liegt.

5. Einkomponentige Zusammensetzung **EZ** gemäss einem der Ansprüche 1 bis 4, **dadurch gekennzeichnet, dass** das oberflächendesaktivierte Polyisocyanat **DI** erhalten wird aus der Umsetzung eines bei Raumtemperatur festen Polyisocyanats mit einer Substanz zur Oberflächendesaktivierung, welche mindestens eine mit Isocyanatgruppen reaktionsfähige Gruppe aufweist.

6. Einkomponentige Zusammensetzung **EZ** gemäss Anspruch 5, **dadurch gekennzeichnet, dass** das dem oberflächendesaktivierten Polyisocyanat **DI** zugrunde liegende, bei Raumtemperatur feste Polyisocyanat ausgewählt ist aus der Gruppe bestehend aus Naphthalin-1,5-diisocyanat (NDI), 3,3'-Dimethyl-4,4'-diisocyanatodiphenyl (TODI), 1,4-Phenylendiisocyanat, dem Isocyanurat von 1-Isocyanato-3,3,5-trimethyl-5-isocyanatomethyl-cyclohexan, dem Uretdion von 4,4'-Diphenylmethandiisocyanat, dem Uretdion von 2,4-Toluylendiisocyanat und dem Harnstoff von 2,4-Toluylendiisocyanat.

7. Einkomponentige Zusammensetzung **EZ** gemäss Anspruch 5, **dadurch gekennzeichnet, dass** die Substanz zur Oberflächendesaktivierung ein primäres oder ein sekundäres Amin, insbesondere ein primäres Polyamin, ein Fettamin, ein Polyalkylenamin oder ein Polyamidoamin, sowie ein Carbonsäuresalz dieser Amine ist.

8. Einkomponentige Zusammensetzung **EZ** gemäss einem der Ansprüche 1 bis 7, **dadurch gekennzeichnet, dass** das oberflächendesaktivierte Polyisocyanat **DI** in der Zusammensetzung in einer solchen Menge vorliegt, dass das Verhältnis der in Bezug auf das Polyurethanpolymer **PUP** überschüssigen blockierten, hydrolytisch aktivierbaren Aminogruppen des blockierten Amins **BA** zu den Isocyanatgruppen des oberflächendesaktivierten Polyisocyanats **DI** 0.25 bis 1, bevorzugt 0.3 bis 0.8, beträgt.

9. Einkomponentige Zusammensetzung gemäss einem der vorhergehenden Ansprüche, **dadurch gekennzeichnet, dass** die Temperatur bei der ersten Aushärtungsstufe unterhalb von 50 °C, insbesondere bei Raumtemperatur bis 40 °C, liegt, und dass die Temperatur bei der zweiten Aushärtungsstufe im Bereich von 60 °C bis 160 °C, bevorzugt von 80 °C bis 140 °C, besonders bevorzugt von 90 °C bis 130 °C, liegt.

10. Einkomponentige Zusammensetzung gemäss einem der vorhergehenden Ansprüche, **dadurch gekennzeichnet, dass** die Feuchtigkeit für die erste Aushärtungsstufe entweder Luftfeuchtigkeit oder in die Zusammensetzung eingemischtes Wasser, insbesondere in Form einer Wasser enthaltenden Paste, darstellt.

11. Vorvernetzte Zusammensetzung **VZ**, umfassend
a') mindestens ein polymeres blockiertes Amin **PBA** mit mindestens zwei blockierten, hydrolytisch aktivierbaren Aminogruppen, welches erhalten wird aus der Reaktion von
mindestens einem Isocyanatgruppen aufweisenden Polyurethanpolymer **PUP**, wie es in einem der Ansprüche 1 bis 10 beschrieben ist,
mit mindestens einem blockierten Amin **BA**, wie es in einem der Ansprüche 1 bis 10 beschrieben ist,
und Feuchtigkeit;
c) mindestens ein bei Raumtemperatur festes, oberflächendesaktiviertes Polyisocyanat **DI**, wie es in einem der Ansprüche 1 bis 10 beschrieben ist; und
d) Feuchtigkeit.

12. Verfahren zum Verkleben von einem Substrat **S1** mit einem Substrat **S2**, welches die Schritte umfasst:
i) Applikation der einkomponentigen Zusammensetzung gemäss einem der Ansprüche 1 bis 8 auf ein Substrat **S1** und Kontaktieren der Zusammensetzung mit Feuchtigkeit bei einer Temperatur unterhalb von 50 °C, so dass eine vorvernetzte Zusammensetzung entsteht;
ii) Aufheizen der vorvernetzten Zusammensetzung mit einer geeigneten Methode auf eine Temperatur im Bereich von 60 °C bis 160 °C, bevorzugt von 80 °C bis 140 °C, besonders bevorzugt von 90 °C bis 130 °C; und
iii) Kontaktieren der vorvernetzten Zusammensetzung mit einem Substrat **S2**;
wobei die Schritte ii) und iii) auch gleichzeitig oder in umgekehrter Reihenfolge erfolgen können; und
wobei das Substrat **S2** aus dem gleichen oder einem unterschiedlichen Material wie das Substrat **S1** besteht.

13. Modulkörper (2) bestehend aus einem Substrat **S1** (11) und einer darauf befindlichen vorvernetzten Zusammensetzung (5'), welche aus einer einkomponentigen Zusammensetzung gemäss einem der Ansprüche 1 bis 8 und der Einwirkung von Feuchtigkeit (9) erhalten wurde.

14. Verbundkörper (3) bestehend aus einem Substrat **S1** (11), einem Substrat **S2** (12) und einer sich zwischen Substrat **S1** (11) und Substrat **S2** (12) befindlichen ausgehärteten Zusammensetzung (5"), welche aus einer einkomponentigen Zusammensetzung gemäss einem der Ansprüche 1 bis 8 und der Einwirkung von Wärme (8) und Feuchtigkeit (9) erhalten wurde.

## Claims

1. Single-component composition which can be cured in two stages, where, in the first curing stage, a pre-crosslinked composition is produced using moisture and, in the second curing stage, a cured composition is formed by means of heat, **characterized in that** said composition comprises:
a) at least one isocyanate polyurethane polymer **PUP**;
b) at least one blocked amine **BA**, with at least two blocked amino groups that can be activated hydrolytically; and
c) at least one surface-deactivated polyisocyanate **DI** that is solid at room temperature,
subject to the proviso that the blocked, hydrolytically activatable amino groups, present in the composition, are present in a stoichiometric excess in relation to the number of isocyanate groups of the polyurethane polymer **PUP**.

2. Single-component composition **EZ** in accordance with claim 1, **characterized in that** the blocked amine **BA** is a polyaldimine **PA** having the formula (I), 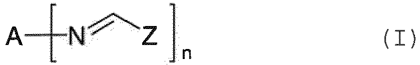 where:
n is 2 or 3 or 4, preferably 2 or 3;
A is an n-valent hydrocarbon radical, having from 2 to 30 carbon atoms that, where applicable, contains at least one heteroatom, notably in the form of ether oxygen or tertiary amine nitrogen; and
Z is free of hydroxyl-, mercapto-, primary and secondary amino groups and is either a moiety Z¹, having the formula (II), 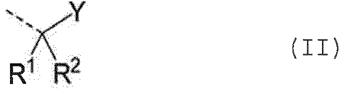 where:
Y is a monovalent hydrocarbon radical, having 1 to 32 carbon atoms, which, where applicable, has at least one heteroatom, particularly oxygen or nitrogen in the form of ether, carbonyl, ester, amido, urea, urethane or tertiary amino groups, and
R¹ and R² are either,
each, independently of each other, in each case a monovalent hydrocarbon radical, having 1 to 12 carbon atoms, or together represent a divalent hydrocarbon radical, having 4 to 12 carbon atoms, which is part of a, where applicable, substituted carbocyclic ring, having 5 to 8, preferably 6, carbon atoms,
or is a moiety Z²,
where Z² is either a substituted or unsubstituted aryl or heteroaryl radical, which has a ring size of 5 to 8, preferably 6 atoms, or is 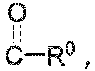 where R⁰ is a hydrogen atom or an alkoxy radical or a substituted or unsubstituted alkenyl or arylalkenyl moiety with at least 6 carbon atoms.

3. Single-component composition **EZ** in accordance with claim 2, **characterized in that** the polyaldimine **PA** is a polyaldimine **PA1,** having the formula (III), 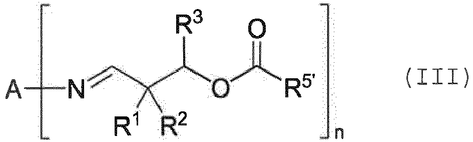 where:
R³ is a hydrogen atom, an alkyl group or a cycloalkyl or arylalkyl group, having 1 to 12 carbon atoms; and
R^{5'} is either
a linear or branched alkyl radical, having 6 to 30, especially 11 to 30, carbon atoms, optionally with cyclic components and optionally with at least one heteroatom, particularly oxygen in the form of ether, carbonyl or ester groups,
or a mono- or polyunsaturated, linear or branched hydrocarbon moiety with 6 to 30, especially 11 to 30, carbon atoms.

4. Single-component composition EZ in accordance with one of claims 1 to 3, **characterized in that** the average particle diameter of the surface-deactivated polyisocyanate **DI** lies in the range from 0.01 to 100 microns, preferably 0.1 to 50 microns, particularly preferably, 0.3 to 30 microns.

5. Single-component composition EZ, in accordance with one of claims 1 to 4, **characterized in that** the surface-deactivated polyisocyanate **DI** is obtained from the conversion of a polyisocyanate, which is solid at room temperature, with a surface-deactivating substance that has at least one isocyanate-reactive group.

6. Single-component composition **EZ** in accordance with claim 5, **characterized in that** the polyisocyanate, which is solid at room temperature, and on which the surface-deactivated polyisocyanate **DI** is based, is selected from the group comprising naphthalene 1,5-diisocyanate (NDI), 3,3'-dimethyl-4,4'-diisocyanatobiphenyl (TODI), 1,4-phenylene diisocyanate, the isocyanurate of 1-isocyanato-3,3,5-trimethyl-5-isocyanatomethylcyclohexane, the uretdione of 4,4'-diphenylmethane diisocyanate, the uretdione of 2,4-toluene diisocyanate and the urea of 2,4-toluene diisocyanate.

7. Single-component composition **EZ** in accordance with claim 5, **characterized in that** the substance used for surface deactivation is a primary or secondary amine, in particular a primary polyamine, a fatty amine, a polyalkylene amine or a polyamidoamine, and a carboxylic acid salt of these amines.

8. Single-component composition **EZ** in accordance with one of claims 1 to 7, **characterized in that** the surface-deactivated polyisocyanate **DI** is present in the composition to an extent whereby the ratio of the excess, in relation to the polyurethane polymer **PUP** blocked, hydrolytically activatable amino groups of the blocked amine **BA** to the isocyanate groups of the surface-deactivated polyisocyanate **DI** is 0.25 to 1, preferably 0.3 to 0.8.

9. Single-component composition in accordance with one of the preceding claims, **characterized in that** the temperature in the first curing stage is below 50 °C., especially from room temperature to 40 °C., and that the temperature in the second curing stage is in the range from 60 to 160 °C., preferably from 80 to 140 °C., particularly preferably from 90 to 130 °C.

10. Single-component composition in accordance with one of the preceding claims, **characterized in that** the moisture for the first curing stage is either air humidity or water, particularly in the form of a water-containing paste, mixed into the composition.

11. Pre-crosslinked composition **VZ**, comprising
a ') at least one polymeric, blocked amine **PBA** with at least two blocked, hydrolytically activatable amino groups, obtained from the reaction of
at least one polyurethane polymer **PUP** that contains isocyanate groups, as described in any one of claims 1 to 10,
with at least one blocked amine **BA**, as described in any one of claims 1 to 10,
and moisture;
c) at least one surface-deactivated polyisocyanate **DI** that is solid at room temperature, as described in one of claims 1 to 10; and
d) moisture.

12. Procedure for bonding a substrate **S1** to a substrate **S2**, comprising the following steps:
i) Application of the single-component composition, in accordance with one of claims 1 to 8, to a substrate **S1** and the bringing of the composition into contact with moisture at a temperature below 50 °C., so that a pre-crosslinked composition is formed;
ii) Heating the pre-crosslinked composition, by means of a suitable method, to a temperature in the range from 60 to 160 °C., preferably from 80 to 140 °C., particularly preferably from 90 to 130 °C.; and
iii) Bringing the pre-crosslinked composition into contact with a substrate **S2**;
whereby steps ii) and iii) can also occur simultaneously or in reverse order; and
whereby the substrate **S2** is made of the same or from different material as substrate **S1.**

13. Modular body (2) comprising a substrate **S1** (11) and a pre-crosslinked composition (5'), located thereon, which was obtained from a single-component composition, in accordance with one of claims 1 to 8, and the effects of moisture (9).

14. Composite body (3) comprising a substrate **S1** (11), a substrate **S2** (12) and a cured composition (5"), located between the said substrate **S1** (11) and substrate **S2** (12), this cured composition having been obtained from a single-component composition in accordance with one of claims 1 to 8 and the effects of heat (8) and humidity (9).

## Revendications

1. Composition monocomposante, qui est durcissable en deux étapes, une composition pré-réticulée étant formée lors de la première étape de durcissement au moyen d'humidité, et une composition durcie étant formée lors de la deuxième étape de durcissement au moyen de chaleur, **caractérisée en ce qu'**elle comprend :
a) au moins un polymère de polyuréthane comprenant des groupes isocyanate PUP ;
b) au moins une amine bloquée BA comprenant au moins deux groupes amino bloqués, activables hydrolytiquement ; et
c) au moins un polyisocyanate désactivé en surface, solide à température ambiante DI,
à condition que les groupes amino bloqués, activables hydrolytiquement, présents dans la composition, soient présents en un excès stoechiométrique par rapport au nombre de groupes isocyanate du polymère de polyuréthane PUP.

2. Composition monocomposante EZ selon la revendication 1, **caractérisée en ce que** l'amine bloquée BA est une polyaldimine PA de formule (I) 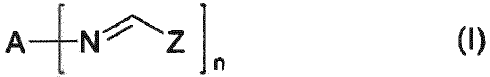 dans laquelle
n représente 2 ou 3 ou 4, de préférence 2 ou 3 ;
A représente un radical hydrocarboné n-valent de 2 à 30 atomes C, qui contient éventuellement au moins un hétéroatome, notamment sous la forme d'un oxygène d'éther ou d'un azote d'amine tertiaire ; et
Z est exempt de groupes hydroxyle, mercapto et amino primaires et secondaires, et
soit représente un radical Z¹ de formule (II) 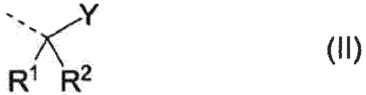 dans laquelle
Y représente un radical hydrocarboné monovalent de 1 à 32 atomes C, qui contient éventuellement au moins un hétéroatome, notamment un oxygène ou un azote sous la forme de groupes éther, carbonyle, ester, amino, urée, uréthane ou amino tertiaires, et
R¹ et R² soit
représentent chacun indépendamment l'un de l'autre un radical hydrocarboné monovalent de 1 à 12 atomes C,
soit représentent ensemble un radical hydrocarboné bivalent de 4 à 12 atomes C, qui fait partie d'un cycle carbocyclique éventuellement substitué, de 5 à 8, de préférence 6, atomes C,
soit représente un radical Z²
Z² soit représentant un radical aryle ou hétéroaryle substitué ou non substitué, qui présente une taille de cycle de 5 à 8, de préférence de 6, atomes, soit représentant 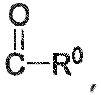 R⁰ représentant un atome d'hydrogène ou un radical alcoxy ou un radical alcényle ou arylalcényle substitué ou non substitué, contenant au moins 6 atomes C.

3. Composition monocomposante EZ selon la revendication 2, **caractérisée en ce que** la polyaldimine PA est une polyaldimine PA1 de formule (III) 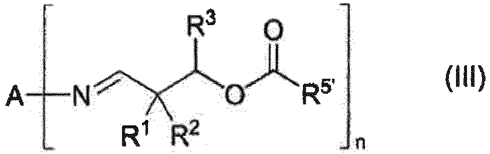 dans laquelle
R³ représente un atome d'hydrogène ou un groupe alkyle ou un groupe cycloalkyle ou un groupe arylalkyle de 1 à 12 atomes C ; et
R^{5'} soit
représente un radical alkyle linéaire ou ramifié de 6 à 30, notamment 11 à 30, atomes C, éventuellement contenant des fractions cycliques et éventuellement contenant au moins un hétéroatome, notamment un oxygène sous la forme de groupes éther, carbonyle ou ester, soit représente un radical hydrocarboné mono- ou polyinsaturé, linéaire ou ramifié, de 6 à 30, notamment 11 à 30, atomes C.

4. Composition monocomposante EZ selon l'une quelconque des revendications 1 à 3, **caractérisée en ce que** le diamètre de particule moyen du polyisocyanate désactivé en surface DI se situe dans la plage allant de 0,01 à 100 µm, de préférence de 0,1 à 50 µm, de manière particulièrement préférée de 0,3 à 30 µm.

5. Composition monocomposante EZ selon l'une quelconque des revendications 1 à 4, **caractérisée en ce que** le polyisocyanate désactivé en surface DI est obtenu par la mise en réaction d'un polyisocyanate solide à température ambiante avec une substance pour la désactivation de surface, qui comprend au moins un groupe réactif avec les groupes isocyanate.

6. Composition monocomposante EZ selon la revendication 5, **caractérisée en ce que** le polyisocyanate solide à température ambiante à base du polyisocyanate désactivé en surface DI est choisi dans le groupe constitué par le 1,5-diisocyanate de naphtaline (NDI), le 3,3'-diméthyl-4,4'-diisocyanatodiphényle (TODI), le diisocyanate de 1,4-phénylène, l'isocyanurate de 1-isocyanato-3,3,5-triméthyl-5-isocyanatométhyl-cyclohexane, l'uretdione de diisocyanate de 4,4'-diphénylméthane, l'uretdione de diisocyanate de 2,4-toluylène et l'urée de diisocyanate de 2,4-toluylène.

7. Composition monocomposante EZ selon la revendication 5, **caractérisée en ce que** la substance pour la désactivation de surface est une amine primaire ou secondaire, notamment une polyamine primaire, une amine grasse, une polyalkylène-amine ou une polyamidoamine, ainsi qu'un sel d'acide carboxylique de ces amines.

8. Composition monocomposante EZ selon l'une quelconque des revendications 1 à 7, **caractérisée en ce que** le polyisocyanate désactivé en surface DI est présent dans la composition en une quantité telle que le rapport entre les groupes amino bloqués, activables hydrolytiquement, de l'amine bloquée BA présents en excès par rapport au polymère de polyuréthane PUP, et les groupes isocyanate du polyisocyanate désactivé en surface DI est de 0,25 à 1, de préférence de 0,3 à 0,8.

9. Composition monocomposante selon l'une quelconque des revendications précédentes, **caractérisée en ce que** la température lors de la première étape de durcissement se situe en dessous de 50 °C, notamment de la température ambiante à 40 °C, et **en ce que** la température lors de la deuxième étape de durcissement se situe dans la plage allant de 60 °C à 160 °C, de préférence de 80 °C à 140 °C, de manière particulièrement préférée de 90 °C à 130 °C.

10. Composition monocomposante selon l'une quelconque des revendications précédentes, **caractérisée en ce que** l'humidité pour la première étape de durcissement est soit de l'humidité de l'air, soit de l'eau incorporée dans la composition, notamment sous la forme d'une pâte contenant de l'eau.

11. Composition pré-réticulée VZ, comprenant :
a') au moins une amine bloquée polymère PBA comprenant au moins deux groupes amino bloqués, activables hydrolytiquement, qui est obtenue par la réaction de
au moins un polymère de polyuréthane comprenant des groupes isocyanate PUP, tel que décrit dans l'une quelconque des revendications 1 à 10,
avec au moins une amine bloquée BA, telle que décrite dans l'une quelconque des revendications 1 à 10,
et de l'humidité ;
c) au moins un polyisocyanate désactivé en surface, solide à température ambiante DI, tel que décrit dans l'une quelconque des revendications 1 à 10 ;
et
d) de l'humidité.

12. Procédé de collage d'un substrat S1 avec un substrat S2, qui comprend les étapes suivantes :
i) l'application de la composition monocomposante selon l'une quelconque des revendications 1 à 8 sur un substrat S1 et la mise en contact de la composition avec de l'humidité à une température inférieure à 50 °C, de manière à former une composition pré-réticulée ;
ii) le chauffage de la composition pré-réticulée avec une méthode appropriée à une température dans la plage allant de 60 °C à 160 °C, de préférence de 80 °C à 140 °C, de manière particulièrement préférée de 90 °C à 130 °C ; et
iii) la mise en contact de la composition pré-réticulée avec un substrat S2 ;
les étapes ii) et iii) pouvant également avoir lieu simultanément ou dans l'ordre inverse ; et
le substrat S2 étant constitué du même matériau ou d'un autre matériau que le substrat S1.

13. Corps modulaire (12) constitué par un substrat S1 (11) et une composition pré-réticulée (5') se trouvant sur celui-ci, qui a été obtenue à partir d'une composition monocomposante selon l'une quelconque des revendications 1 à 8 et par l'action d'humidité (9).

14. Corps composite (3) constitué par un substrat S1 (11), un substrat S2 (12) et une composition durcie (5") se trouvant entre le substrat S1 (11) et le substrat S2 (12), qui a été obtenue à partir d'une composition monocomposante selon l'une quelconque des revendications 1 à 8 et par l'action de chaleur (8) et d'humidité (9).
